# EUROPEAN PATENT APPLICATION

(11) **EP 4 783 687 A2**
(43) Date of publication of application: **29.07.2026**
(21) Application number: 26174441.1
(22) Date of filing: 06.08.2021
(51) Int. Cl.: H04W 56/00

(54) **SYNCHRONIZATION SIGNAL BLOCK MEASUREMENT TIMING CONFIGURATION WINDOW AND MEASUREMENT GAP CONFIGURATION FOR NON-TERRESTRIAL NETWORKS**

(30) Priority: 06.08.2020 US 202063062187 P
(62) Divisional of application: 21758447.3
(71) Applicant: Telefonaktiebolaget LM Ericsson (publ), 164 83 Stockholm (SE)
(72) Inventor: EULER, Sebastian, Storvreta (SE); LIN, Xingqin, Santa Clara (US); RUNE, Johan, Lidingö (SE); KHAN, Talha, Santa Clara (US); LIBERG, Olof, Enskede (SE); MÄÄTTÄNEN, Helka-Liina, Helsinki (FI)
(74) Representative: Haseltine Lake Kempner LLP

(57) **Abstract**

A method performed by a wireless device for a Synchronization Signal Block Measurement Time Configuration (SMTC) window and measurement gap configuration includes receiving at least one configuration parameter for the SMTC window and/or a measurement gap from a network. The wireless device performs an adjustment of the SMTC window and/or the measurement gap based on the at least one configuration parameter and transmits the adjustment to the network. The wireless device measures at least one synchronization signal based on the adjustment to the SMTC window and/or the measurement gap.

## Description

### TECHNICAL FIELD

The present disclosure relates, in general, to wireless communications and, more particularly, systems and methods for Synchronization Signal Block Measurement Timing Configuration (SMTC) window and measurement gap configuration for Non-Terrestrial Networks (NTNs).

### BACKGROUND

There is an ongoing resurgence of satellite communications. Several plans for satellite networks have been announced in the past few years. The target services vary, from backhaul and fixed wireless, to transportation, to outdoor mobile, to Internet of Things (IoT). Satellite networks could complement mobile networks on the ground by providing connectivity to underserved areas and multicast/broadcast services. To benefit from the strong mobile ecosystem and economy of scale, adapting the terrestrial wireless access technologies including Long Term Evolution (LTE) and New Radio (NR) for satellite networks is drawing significant interest. For example, 3^{rd} Generation Partnership Project (3GPP) completed an initial study in Release 15 on adapting NR to support non-terrestrial networks (mainly satellite networks). See, 3GPP TR 38.821, Study on New Radio (NR) to support non-terrestrial networks. This initial study focused on the channel model for the non-terrestrial networks (NTNs), defining deployment scenarios, and identifying the key potential impacts. Afterwards 3GPP completed a follow-up study item in Release 16 on solutions evaluation for NR to support non-terrestrial networks. See, RP-181370, Study on solutions evaluation for NR to support non-terrestrial Network

A satellite radio access network usually includes the following components: (1) Gateway that connects satellite network to core network; (2) Satellite that refers to a space-borne platform; (3) Terminal that refers to user equipment (UE); (4) Feeder link that refers to the link between a gateway and a satellite; and (5) Service link that refers to the link between a satellite and a terminal. The link from gateway to terminal is often called forward link, and the link from terminal to gateway is often called return link. Depending on the functionality of the satellite in the system, we can consider two transponder options:
- Bent-pipe transponder: satellite forwards the received signal back to the earth with only amplification and a shift from uplink frequency to downlink frequency.
- Regenerative transponder: satellite includes on-board processing to demodulate and decode the received signal and regenerate the signal before sending it back to the earth.

Depending on the orbit altitude, a satellite may be categorized as Low Earth Orbit (LEO), Medium Earth Orbit (MEO), or Geostationary Orbit (GEO) satellite.
- LEO: typical heights ranging from 250 - 1,500 km, with orbital periods ranging from 90 - 130 minutes.
- MEO: typical heights ranging from 5,000 - 25,000 km, with orbital periods ranging from 2 - 14 hours.
- GEO: height at 35,786 km, with an orbital period of 24 hours.

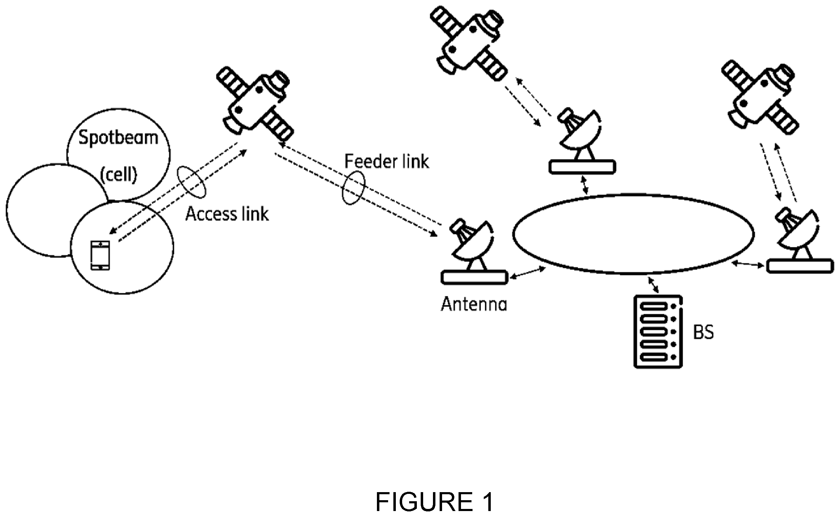

A satellite typically generates several beams over a given area. The footprint of a beam is usually in an elliptic shape, which has been traditionally considered as a cell. The footprint of a beam is also often referred to as a spotbeam. The spotbeam may move over the Earth's surface with the satellite movement or may be Earth-fixed with some beam pointing mechanism used by the satellite to compensate for its motion. The size of a spotbeam depends on the system design and may range from tens of kilometers to a few thousands of kilometers. FIGURE 1 illustrates an example architecture of a satellite network with bent-pipe transponders.

The two main physical phenomena that affect satellite communications system design are the long propagation delay and Doppler effects. The Doppler effects are especially pronounced for LEO satellites. The distance between the UE and a satellite can vary significantly, depending on the position of the satellite and thus the elevation angle ε seen by the UE. Assuming circular orbits, the minimum distance is realized when the satellite is directly above the UE (ε = 90°), and the maximum distance when the satellite is at the smallest possible elevation angle. Table 1 shows the distances between satellite and UE for different orbital heights and elevation angles together with the one-way propagation delay and the maximum propagation delay difference (the difference towards ε = 90°). Note that this table assumes regenerative architecture. For the transparent case, the propagation delay between gateway and satellite needs to be considered as well, unless the base station corrects for that.

**TABLE 1**

| Orbital height | Elevation angle | Distance UE <-> satellite | One-way propagation delay | Propagation delay difference |
|---|---|---|---|---|
| 600 km | 90° | 600 km | 2.0 ms | --- |
| | 30° | 1075 km | 3.6 ms | 1.6 ms |
| | 10° | 1932 km | 6.4 ms | 4.4 ms |
| 1200 km | 90° | 1200 km | 4.0 ms | --- |
| | 30° | 1999 km | 6.7 ms | 2.7 ms |
| | 10° | 3131 km | 10.4 ms | 6.4 ms |
| 35786 km | 90° | 35786 km | 119.4 ms | --- |
| | 30° | 38609 km | 128.8 ms | 9.4 ms |
| | 10° | 40581 km | 135.4 ms | 16.0 ms |

In RP-193234, solutions for NR to support NTNs, the Work Item Description (WID) is given for Rel-17 NTN. The WID includes:
The following control plane procedures enhancements should be specified (see TR 38.821)
- Idle mode:
   o Definition of additional assistance information for cell selection/reselection (e.g. using UE location information, satellite Ephemeris information)
   o Definition of NTN (satellite/[High Altitude Platform System (HAPS)]) cell specific information in [SYSTEM INFORMATION BLOCK (SIB)]
- Connected mode
   o Enhancement necessary to take into account location information (UE & Satellite/HAPS) and/or ephemeris in determining when to perform hand-over, in order to have a high degree of hand-over control for hand-over robustness and coverage management.
   o Enhancement to existing measurement configurations to address absolute propagation delay difference between satellites (e.g. SMTC measurement gap adaptation to the [Synchronization Signal Block (SSB)/Channel State Information-Reference Signal (CSI-RS)] measurement window) [RAN2/4].
- Service continuity for mobility from Terrestrial Network (TN) to NTN and from NTN to TN systems (to be addressed when connected mode mobility has sufficiently progressed)

NR synchronization signal (SS) consists of Primary Synchronization Signal (PSS) and Secondary Synchronization Signal (SSS). NR physical broadcast channel (PBCH) carries the very basic system information. The combination of Synchronization Signal (SS) and PBCH is referred to as SSB in NR. Multiple Synchronization Signal Blocks (SSBs) are transmitted in a localized burst set. Within an SS burst set, multiple SSBs can be transmitted in different beams. The transmission of SSBs within a localized burst set is confined to a 5 ms window. The set of possible SSB time locations within an SS burst set depends on the numerology which in most cases is uniquely identified by the frequency band. The SSB periodicity can be configured from the value set {5, 10, 20, 40, 80, 160} ms.

A UE does not need to perform measurements with the same periodicity as the SSB periodicity. Accordingly, the SSB measurement time configuration (SMTC) has been introduced for NR. The signaling of SMTC window informs the UE of the timing and periodicity of SSBs that the UE can use for measurements. The SMTC window periodicity can be configured from the value set {5, 10, 20, 40, 80, 160} ms, matching the possible SSB periodicities. The SMTC window duration can be configured from the value set {1, 2, 3, 4, 5} ms.

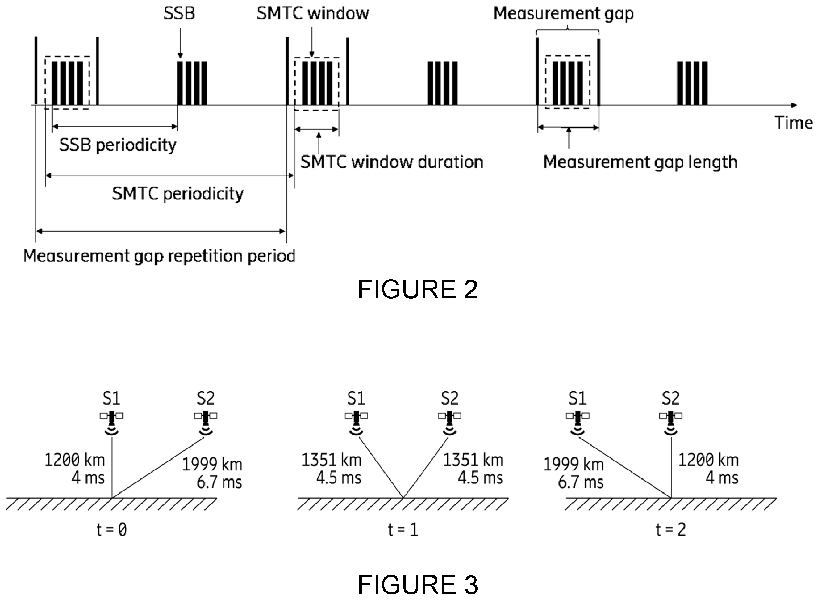

The UE may use the same Radio Frequency (RF) module for measurements of neighboring cells and data transmission in the serving cell. Measurement gaps allow the UE to suspend the data transmission in the serving cell and perform the measurements of neighboring cells. The measurement gap repetition periodicity can be configured from the value set {20, 40, 80, 160} ms, the gap length can be configured from the value set {1.5, 3, 3.5, 4, 5.5, 6} ms. Usually, the measurement gap length is configured to be larger than the SMTC window duration to allow for RF retuning time. Measurement gap time advance is also introduced to fine tune the relative position of the measurement gap with respect to the SMTC window. The measurement gap timing advance can be configured from the value set {0, 0.25, 0.5} ms. FIGURE 2 illustrates SSB, SMTC window, and measurement gap.

There currently exist certain challenge(s). For example, assuming the SSB/CSI-RS transmissions from different satellites are synchronized and transmitted at the same time, they will still arrive at the UE at different times because of the differences in distance and thus propagation delay. If an SMTC window/measurement gap is configured based on the timing of the serving satellite, SSB/CSI-RS transmissions from other satellites might arrive at the UE outside the configured SMTC measurement window/measurement gap, which means that the UE will miss the reference signals and will not be able to perform the measurements.

There is no problem if the length of the SMTC window/measurement gap is large enough that the transmissions from all satellites fall into the window despite the different propagation delays. According to 3GPP TR 38.331, a length of up to 5 subframes and 6 subframes can be configured for the SMTC window and measurement gap, respectively. Comparing with the values in Table 1, it can be seen that this is barely enough for the 600 km case. For the 1200 km case, it works only if a minimum elevation angle of 30° is assumed. For GEO, the propagation delay difference is larger than the SMTC window/measurement gap in all cases.

What complicates the problem is that the propagation delay differences will shift with the movement of the satellites. FIGURE 3 illustrates propagation delay differences. In the example shown, there are two satellites S1 and S2, in a 1200 km orbit. At t=0, S1 is directly above the UE while S2 is at an elevation angle of 30°. The propagation delays are 4 ms and 6.7 ms, respectively. Signals transmitted at the same time arrive 2.7 ms earlier from S1 than from S2. At t=1, the UE sees both satellites under an elevation angle of 60°, and the propagation delay is 4.5 ms towards both S1 and S2. At this point, signals transmitted at the same time also arrive at the same time at the UE. Finally, at t=2, the situation is reversed compared to t=0. Now signals from S2 arrive 2.7 ms earlier than from S1, if they are transmitted at the same time.

### SUMMARY

Certain aspects of the present disclosure and their embodiments may provide solutions to these or other challenges. For example, according to certain embodiments, the UE is provided with additional information, which the UE uses to adjust the timing of the SMTC windows and measurement gaps and keep them aligned with the propagation delay of the neighboring satellites. This may allow a UE to measure reference signals from various satellites. According to certain embodiments, a method by a wireless device for a SMTC window and measurement gap configuration includes receiving at least one configuration parameter for the SMTC window and/or a measurement gap from a network. The wireless device performs an adjustment of the SMTC window and/or the measurement gap based on the at least one configuration parameter and transmits the adjustment to the network. The wireless device measures at least one synchronization signal based on the adjustment to the SMTC window and/or the measurement gap.

According to certain embodiments, a wireless device for a SMTC window and measurement gap configuration includes processing circuitry configured to receive at least one configuration parameter for the SMTC window and/or a measurement gap from a network. The processing circuitry is configured to perform an adjustment of the SMTC window and/or the measurement gap based on the at least one configuration parameter and transmit the adjustment to the network. The processing circuitry is configured to measure at least one synchronization signal based on the adjustment to the SMTC window and/or the measurement gap.

According to certain embodiments, a method by a network node for SMTC window and measurement gap configuration includes transmitting, to at least one wireless device, at least one configuration parameter for the SMTC window and/or a measurement gap. The configuration parameter is associated with a time when the at least one wireless device is to attempt to receive at least one synchronization signal. The network node receives, from the at least one wireless device, an indication that the at least one wireless device has made an adjustment to at least one of the SMTC window or the measurement gap and transmits the at least one synchronization signal based on the adjustment made by the wireless device.

According to certain embodiments, a network node includes for SMTC window and measurement gap configuration includes processing circuitry configured to transmit, to at least one wireless device, at least one configuration parameter for the SMTC window and/or a measurement gap. The configuration parameter is associated with a time when the at least one wireless device is to attempt to receive at least one synchronization signal. The processing circuitry is configured to receive, from the at least one wireless device, an indication that the at least one wireless device has made an adjustment to at least one of the SMTC window or the measurement gap and transmit the at least one synchronization signal based on the adjustment made by the wireless device.

Certain embodiments may provide one or more of the following technical advantage(s). For example, a technical advantage of certain embodiments is that the UE is provided with information to allow the UE to adjust the SMTC windows and measurement gaps according to the propagation delays of the neighboring satellites and serving satellite, and thus perform measurements as intended.

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an example architecture of a satellite network with bent-pipe transponders;
FIGURE 2 illustrates SSB, SMTC window, and measurement gap;
FIGURE 3 illustrates propagation delay differences;
FIGURE 4 illustrates a UE in cell C that is configured to measure cells A and B from another satellite;
FIGURE 5 illustrates an example, wherein the SMTC windows and measurement gaps only cover every second SS Burst, according to certain embodiments;
FIGURE 6 illustrates one example, wherein the SMTC windows and measurement gaps cover every third SS Burst in each of cell A and B, according to certain embodiments;
FIGURE 7 illustrates one example, wherein the SMTC windows and measurement gaps only cover every second SS Burst, according to certain embodiments;
FIGURE 8 illustrates one example, wherein the SMTC windows and measurement gaps cover every third SS Burst in each of cell A and B, according to certain embodiments;
FIGURE 9 illustrates another timing relation of the reference signals in the situation depicted in FIGURE 2;
FIGURE 10 illustrates an example wireless network, according to certain embodiments;
FIGURE 11 illustrates an example network node, according to certain embodiments;
FIGURE 12 illustrates an example wireless device, according to certain embodiments;
FIGURE 13 illustrate an example user equipment, according to certain embodiments;
FIGURE 14 illustrates a virtualization environment in which functions implemented by some embodiments may be virtualized, according to certain embodiments;
FIGURE 15 illustrates a telecommunication network connected via an intermediate network to a host computer, according to certain embodiments;
FIGURE 16 illustrates a generalized block diagram of a host computer communicating via a base station with a user equipment over a partially wireless connection, according to certain embodiments;
FIGURE 17 illustrates a method implemented in a communication system, according to one embodiment;
FIGURE 18 illustrates another method implemented in a communication system, according to one embodiment;
FIGURE 19 illustrates another method implemented in a communication system, according to one embodiment;
FIGURE 20 illustrates another method implemented in a communication system, according to one embodiment;
FIGURE 21 depicts a wireless network comprising different devices connected, either directly or indirectly, to the wireless network through one or more access network nodes, such as gNBs, according to certain embodiments;
FIGURES 22A-22B illustrate a method, according to certain embodiments;
FIGURE 23 illustrates an example method by a wireless device for a SMTC window and measurement gap configuration, according to certain embodiments;

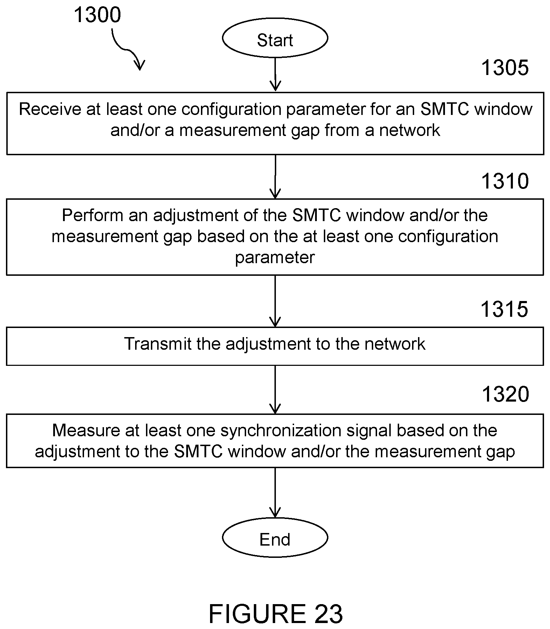

FIGURE 23 illustrates an exemplary virtual computing device, according to certain embodiments; and

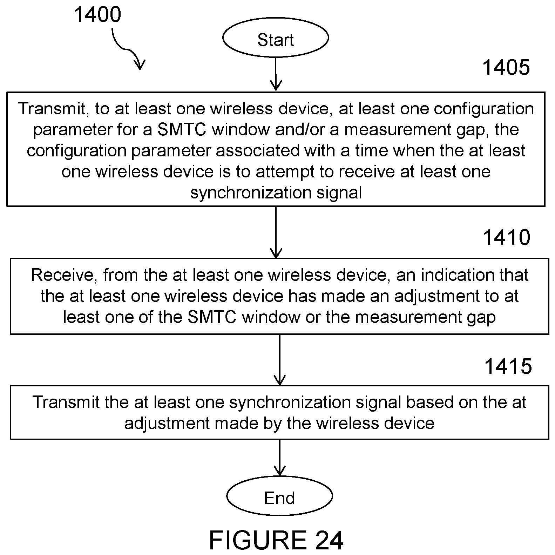

FIGURE 24 illustrates an example method by a base station for SMTC window and measurement gap configuration, according to certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

It is proposed herein to configure different SMTC windows/measurement gaps for different satellites/cells. This may be achieved in part by the network being aware of the different propagation delays. In general, at a high level, the procedure of certain embodiments may involve:
- The network configures the UE with SMTC windows and measurement gaps as needed.
- The network provides all necessary information for the UE to be able to self-adjust the SMTC windows and measurement gaps. This information may include timestamps and/or ephemeris data and/or UE position and/or reference positions for the cells, depending on the circumstances, see below.
- Using the provided information as well as its own position, if available, the UE recalculates the distances to the satellites and the propagation delays as needed and adjusts the SMTC windows and measurement gaps accordingly.
- If the UE needs to adjust the measurement gaps, it may need to inform the network on how the measurement gaps are adjusted so that the network can respect the adjusted gaps in its scheduling decisions. The UE may have been configured with finite options on how the measurement gaps may be further adjusted and UE may then indicate with an index to one of the options. The options may be a set of offsets for starting the gap pattern, or an adjustment of the length of the gap window. It is important that UE and network have the same understanding when the scheduling restrictions take place. This may be specifically important in NTN where retransmissions can take a lot of time. However, in some scenarios, the network, i.e. the serving gNB/satellite can predict when the UE recalculates and updates the SMTC, and consequently the measurement gap, based on knowledge of the other satellite's orbit. The accuracy of such predictions however depends on the gNB's knowledge of the UE's position (which may be estimated by the network or provided by the UE).

As a general embodiment, at least one configuration for SMTC windows and measurement gaps is needed per satellite, due to the movement of the satellite relative to the UE. This is not supported by the existing RRC specification (3GPP TS 38.331 version 16.0.0), e.g. the *SSB-MTC* information element. The current definition allows a full SMTC window (including *periodicity, duration* and offset) per carrier frequency (parameter name: *smtc* or *smtc1,* parameter type: *SSB-MTC*)*.* In addition, it is possible to provide a partial SMTC window configuration on a per cell basis, i.e. including *periodicity* (parameter name: *smtc2,* parameter type *SSB-MTC2;* and parameter name: *smtc2-LP-r16,* parameter name *SSB-MTC2-LP-r16),* but no *duration* and *offset,* in which case the *duration* and *offset* should be reused from the parallel *SSB-MTC* (*smtc*/*smtc1*) configuration. In addition, but only for IAB-MT, it is possible to provide a full per cell SMTC window configuration (i.e. including *periodicity, duration* and *offset,* parameter type: *SSB-MTC3-r16*)*.* Thus, we need to introduce an additional parameter type for the herein described NTN purpose, e.g. with full SMTC window configuration (i.e. including *periodicity, duration* and *offset*) per satellite. Alternatively, the parameter should contain a full SMTC window configuration (i.e. including *periodicity, duration* and *offset*) per cell, in which case an option could be to reuse the *SSB-MTC3-r16* parameter type.

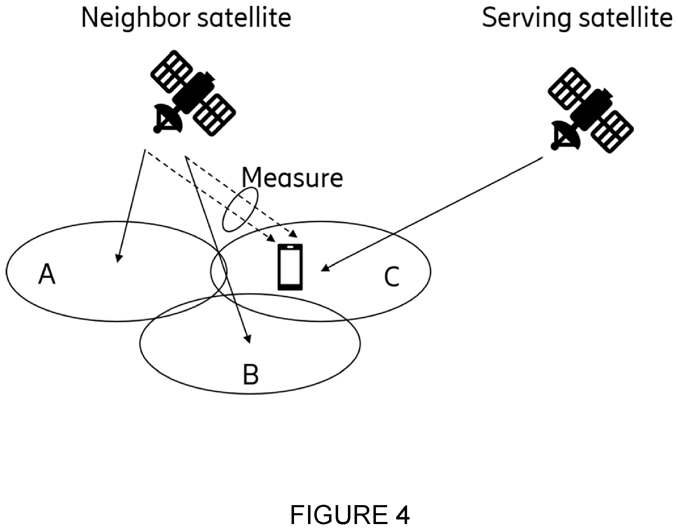

Four different cases need to be distinguished, though, depending on if the cells of a particular neighbor satellite are synchronized in time and if the network knows the UE's location. For these four cases, it is assumed that the UE knows its location. For example, the UE may obtain it using GNSS and/or the network estimates it and shares it with the UE. FIGURE 4 illustrates a UE in cell C that is configured to measure cells A and B from another satellite.

### Case 1: Cells associated with the neighbor satellite(s) are synchronized, and UE location is known to the network.

In this case, the transmissions from all cells are synchronized at the UE's location, and only one SMTC window is needed to cater for measurements on all cells associated with the neighbor satellite. According to certain embodiments, the procedure may include some or all of the following steps:
1) The network configures a single SMTC window and measurement gap configuration per group of cells associated with the same satellite.
2) The network provides a timestamp indicating the point in time for which the configuration is valid, and optionally (unless known by the UE from other configuration or signaling) ephemeris data for all relevant satellites. This timestamp may be explicit, or, as an alternative, implicit, being equivalent to the time of reception at the UE or the time corresponding to the SFN, slot and first symbol of the transmission providing the SMTC window configuration(s).
3) Using the provided information as well as its own position, the UE recalculates the distances to the satellites and the propagation delays as needed and adjusts the SMTC windows and measurement gaps accordingly (in particular adjusts the offset).
4) If the UE needs to adjust the measurement gaps, it may need to inform the network on how the measurement gaps are adjusted so that the network can respect the adjusted gaps in its scheduling decisions. The UE may have been configured with finite options on how the measurement gaps may be further adjusted and UE may then indicate with an index to one of the options. The options may be a set of offsets for starting the gap pattern, or an adjustment of the length of the gap window. It is important that UE and network have the same understanding when the scheduling restrictions take place. This may be specifically important in NTN where retransmissions can take a lot of time. However, in this case 1 scenario, where the network is aware of the UE's location, the network, i.e. the serving gNB/satellite, can optionally predict when and how the UE recalculates and updates the SMTC, and consequently the measurement gap, based on knowledge of the other satellite's orbit. The accuracy of such predictions could however be reduced if the UE is moving rapidly.

The figure above illustrates one example, wherein the SMTC windows and measurement gaps only cover every second SS Burst. However, other options are also feasible, e.g. that the SMTC windows and possible measurement gaps cover every SS Burst or every third or fourth SS Burst etc.

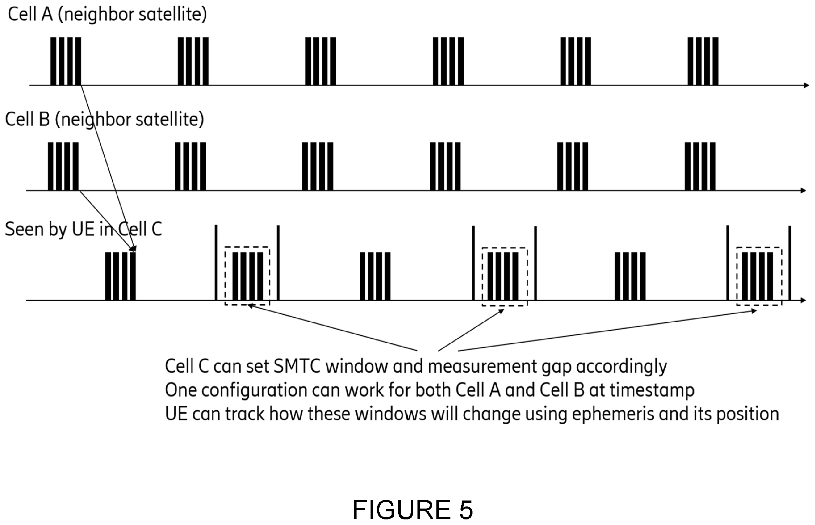

FIGURE 5 illustrates an example, wherein the SMTC windows and measurement gaps only cover every second SS Burst. More specifically, FIGURE 5 shows, the timing relation of the reference signals for the case depicted in FIGURE 4. However, other options are also feasible. For example, the SMTC windows and possible measurement gaps may cover every SS Burst or every third or fourth SS Burst, in various particular embodiments.

### Case 2: Cells associated with the neighbor satellite(s) are not synchronized, and UE location is known to the network.

In Case 2, the transmissions from different cells are not synchronized at the UE's location. Thus, the network needs to configure SMTC windows and measurement gaps per cell. According to certain embodiments, the procedure may include some or all of the following steps:
1) The network configures multiple SMTC window and measurement gap configurations per satellite, i.e. one per cell.
2) The network provides a timestamp indicating the point in time for which the configurations are valid, and optionally (unless known by the UE from other configuration or signaling) ephemeris data for all relevant satellites. This timestamp may be explicit, or, as an alternative, implicit, being equivalent to the time of reception at the UE or the time corresponding to the SFN, slot and first symbol of the transmission providing the SMTC window configuration(s).
3) Using the provided information as well as its own position, the UE recalculates the distances to the satellites and the propagation delays as needed and adjusts the SMTC windows and measurement gaps accordingly (in particular adjusts the offset).
4) If the UE needs to adjust the measurement gaps, it may need to inform the network on how the measurement gaps are adjusted so that the network can respect the adjusted gaps in its scheduling decisions. The UE may have been configured with finite options on how the measurement gaps may be further adjusted and UE may then indicate with an index to one of the options. The options may be a set of offsets for starting the gap pattern, or an adjustment of the length of the gap window. It is important that UE and network have the same understanding when the scheduling restrictions take place. This may be specifically important in NTN where retransmissions can take a lot of time. However, in this case 2 scenario, where the network is aware of the UE's location, the network, i.e. the serving gNB/satellite, can optionally predict when and how the UE recalculates and updates the SMTC, and consequently the measurement gap, based on knowledge of the other satellite's orbit. The accuracy of such predictions could however be reduced if the UE is moving rapidly.

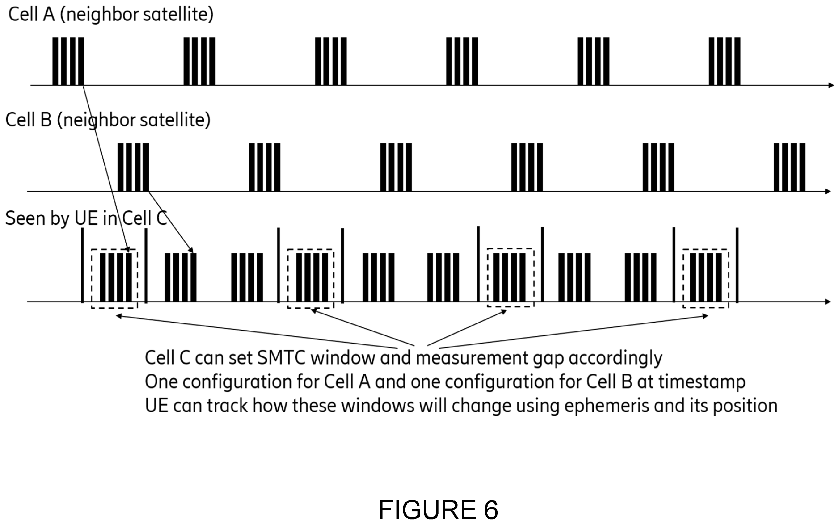

FIGURE 6 illustrates one example, wherein the SMTC windows and measurement gaps cover every third SS Burst in each of cell A and B. Specifically, FIGURE 6 shows the timing relation of the reference signals in this case. However, other options are also feasible. For example, it is recognized that the SMTC windows and possible measurement gaps cover every SS Burst or every second, fourth or fifth SS Burst, etc. in each cell. Furthermore, this may vary between different neighbor cells, in certain embodiments. For example, every SS Burst in one cell may be covered by SMTC windows while the SMTC windows cover only every second SS Burst in another cell.

### Case 3: Cells associated with the neighbor satellite(s) are synchronized, and UE location is not known to the network.

In Case 3, the network can again set only one SMTC window and measurement gap configuration for all the concerned neighbor cells. However, since it doesn't know the UE location, the configuration cannot comprise timing (e.g. offset) tailored for the UE. Instead, the network needs to set the SMTC windows and measurement gaps based on a reference location (e.g. the serving cell center), which it then also needs to provide to the UE. According to certain embodiments, the procedure may include some or all of the following steps:
1) The network configures a single SMTC window and measurement gap configuration per group of cells associated with the same satellite, based on a reference location (e.g. the serving cell center).
2) The network provides a timestamp indicating the point in time for which the configuration is valid, the reference location, and optionally (unless known by the UE from other configuration or signaling) ephemeris data for all relevant satellites. The timestamp may be explicit, or, as an alternative, implicit, being equivalent to the time of reception at the UE or the time corresponding to the SFN, slot and first symbol of the transmission providing the SMTC window configuration(s). The reference location may be provided to the UE together with the SMTC window and measurement gap configuration, i.e. if these configurations are provided via dedicated signaling, the reference location is also provided via the same dedicated signaling, while if the SMTC window and measurement gap configuration are provided via broadcast signaling, the reference location is also provided via the same broadcast signaling. However, it is also possible that the SMTC window and measurement gap configuration are provided via dedicated signaling (e.g. an *RRCReconfiguration* message or an *RRCRelease* message) while the reference location is provided via broadcast signaling, e.g. the system information. When the reference location is provided via dedicated signaling, it may be dynamically selected based on a rough estimate of the UE's location (e.g. the gNB may be able to determine what general part of the cell the UE is located in) in an attempt to minimize the difference between the reference location and the UE's actual location. The reference location may be provided in terms of GNSS coordinates or other geographical coordinates.
3) Using the provided information as well as its own position, the UE recalculates the distances to the satellites and the propagation delays as needed and adjusts the SMTC windows and measurement gaps accordingly (in particular adjusts the offset). Such recalculations will take into account the difference between the reference location and the UE's own location, wherein the UE's location may be obtained e.g. through GNSS measurements.
4) If the UE needs to adjust the measurement gaps, it may need to inform the network on how the measurement gaps are adjusted so that the network can respect the adjusted gaps in its scheduling decisions. The UE may have been configured with finite options on how the measurement gaps may be further adjusted and UE may then indicate with an index to one of the options. The options may be a set of offsets for starting the gap pattern, or an adjustment of the length of the gap window. It is important that UE and network have the same understanding when the scheduling restrictions take place. This may be specifically important in NTN where retransmissions can take a lot of time.

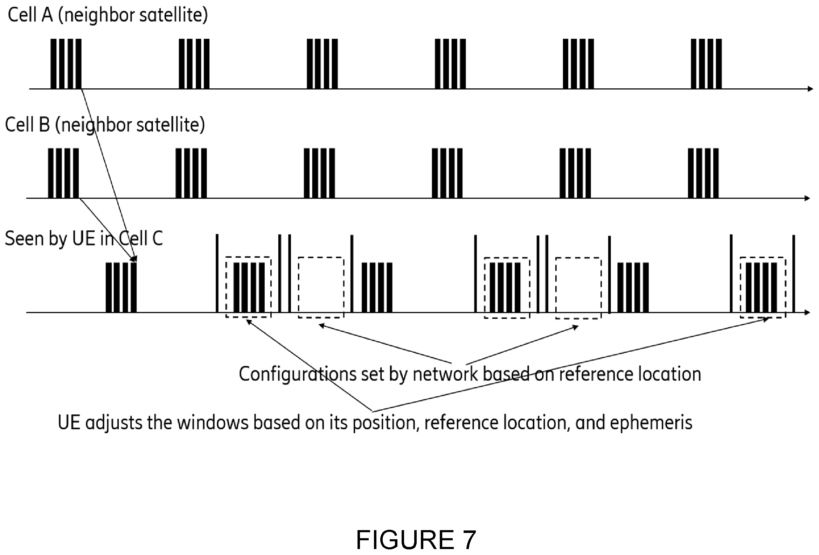

FIGURE 7 illustrates one example, wherein the SMTC windows and measurement gaps only cover every second SS Burst. Specifically, FIGURE 7 shows the timing relation of the reference signals in this case. However, other options are also feasible, e.g. that the SMTC windows and possible measurement gaps cover every SS Burst or every third or fourth SS Burst etc.

### Case 4: Cells associated with the neighbor satellite(s) are not synchronized, and UE location is not known to the network.

In Case 4, the network again needs to configure SMTC windows and measurement gaps per cell (similar to the situation in case 2), based on a reference location (as in case 3, e.g. the cell center), and it needs to provide the reference location to the UE. According to certain embodiments, the procedure may include some or all of the following steps:
1) The network configures multiple SMTC window and measurement gap configurations per satellite, i.e. one per cell, based on a reference location (e.g. the serving cell center).
2) The network provides a timestamp indicating the point in time for which the configurations are valid, the reference location and optionally (unless known by the UE from other configuration or signaling) ephemeris data for all relevant satellites. The timestamp may be explicit, or, as an alternative, implicit, being equivalent to the time of reception at the UE or the time corresponding to the SFN, slot and first symbol of the transmission providing the SMTC window configuration(s). The reference location may be provided to the UE together with the SMTC window and measurement gap configuration, i.e. if these configurations are provided via dedicated signaling, the reference location is also provided via the same dedicated signaling, while if the SMTC window and measurement gap configuration are provided via broadcast signaling, the reference location is also provided via the same broadcast signaling. However, it is also possible that the SMTC window and measurement gap configuration are provided via dedicated signaling (e.g. an *RRCReconfiguration* message or an *RRCRelease* message) while the reference location is provided via broadcast signaling, e.g. the system information. When the reference location is provided via dedicated signaling, it may be dynamically selected based on a rough estimate of the UE's location (e.g. the gNB may be able to determine what general part of the cell the UE is located in) in an attempt to minimize the difference between the reference location and the UE's actual location. The reference location may be provided in terms of GNSS coordinates or other geographical coordinates.
3) Using the provided information as well as its own position, the UE recalculates the distances to the satellites and the propagation delays as needed and adjusts the SMTC windows and measurement gaps accordingly (in particular adjusts the offset). Such recalculations will take into account the difference between the reference location and the UE's own location, wherein the UE's location may be obtained e.g. through GNSS measurements.
4) If the UE needs to adjust the measurement gaps, it may need to inform the network on how the measurement gaps are adjusted so that the network can respect the adjusted gaps in its scheduling decisions. The UE may have been configured with finite options on how the measurement gaps may be further adjusted and UE may then indicate with an index to one of the options. The options may be a set of offsets for starting the gap pattern, or an adjustment of the length of the gap window. It is important that UE and network have the same understanding when the scheduling restrictions take place. This may be specifically important in NTN where retransmissions can take a lot of time.

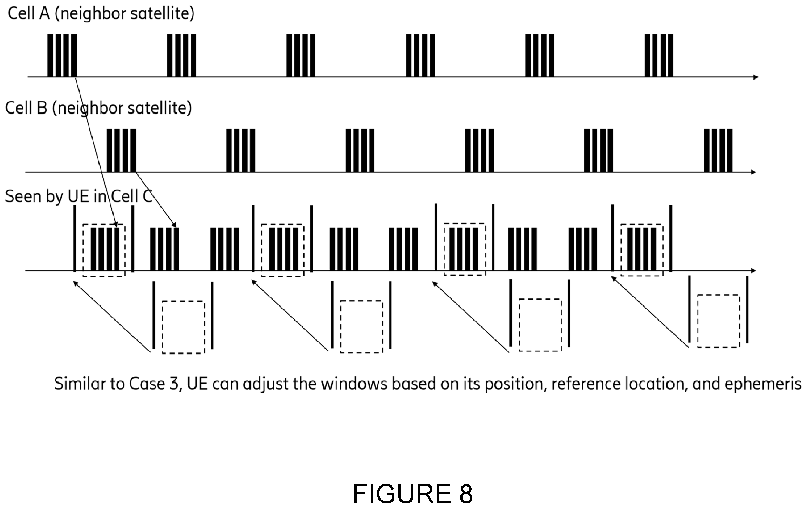

FIGURE 8 illustrates one example, wherein the SMTC windows and measurement gaps cover every third SS Burst in each of cell A and B. Specifically, FIGURE 8 illustrates the timing relation of the reference signals in this case. However, other options are also feasible. For example, the SMTC windows and possible measurement gaps cover every SS Burst or every second, fourth or fifth SS Burst, etc. in each cell. Furthermore, this may vary between different neighbor cells, e.g. every SS Burst in one cell may be covered by SMTC windows while the SMTC windows cover only every second SS Burst in another cell.

In a particular embodiment that may apply to cases 2 and 4, if a sub-group of cells is synchronized, the network does not need to provide individual configurations for these cells but may use a common configuration for these cells such as, for example, a group of neighbor cells served by the same neighbor satellite.

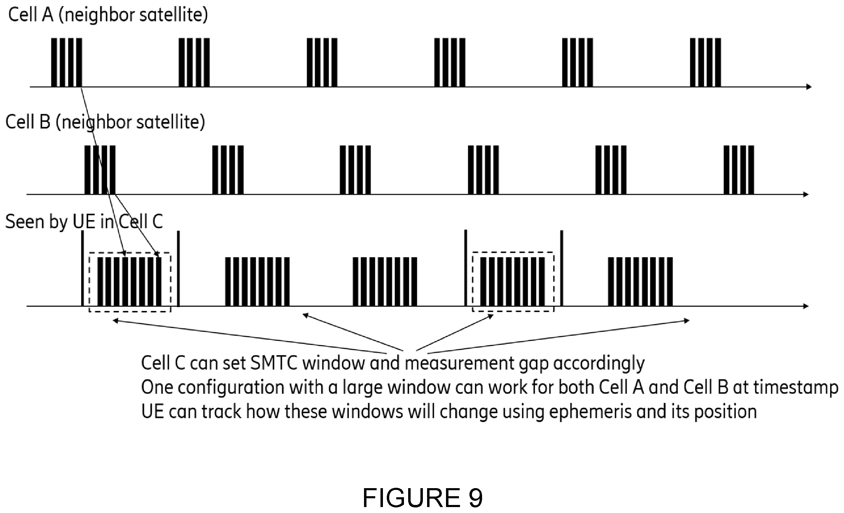

In another particular embodiment that may be apply to cases 2 and 4, instead of providing individual configurations, the network may also configure a single large SMTC window (i.e. long *duration*) and a correspondingly long measurement gap, covering the arrival times of the transmissions from all cells the UE is supposed to measure. This may be particularly beneficial in cases where individual (e.g. cell specific) SMTC window cycles would be close to synchronized and e.g. partially overlapping each other, followed by a period of time not covered by any SMTC window. FIGURE 9 illustrates another timing relation of the reference signals in the situation depicted in FIGURE 2. Specifically, FIGURE 9 is a variant of case 2.

Another, or complementing, way to address the greater timing variations the UE will experience could be to extend the configurable range of the SSB measurement window duration/length, which is captured in the *duration* parameter in the *SSB-MTC* IE in 3GPP TS 38.331 version 16.0.0. The longest measurement window that is possible to configure with the *duration* parameter is 5 ms, but additional possible configuration values indicating longer times, e.g. 6, 7, 8, 10, 12, 15, 20 and/or 30 ms, could be introduced in the standard. Such a possibility to configure an extended SMTC window duration would also come handy when a single SMTC window is configured to cover multiple time shifted (unsynchronized) SS Bursts in different cells (e.g. transmitted from different satellites), as described in one of the embodiments above (denoted sub-embodiments to cases 2 and 4).

### SMTC window configuration in RRC idle mode: UE position is neither known to the network nor the UE.

In the aforementioned cases, it was assumed that the UE knows its position. Another important scenario is where a UE is in RRC idle mode and it does not know its position (e.g. no GNSS support). Then, similar to cases 3 and 4, the network can configure the SMTC window for a cell with respect to a reference location in that cell (e.g. the cell center). According to certain embodiments, the network can broadcast information about ephemeris of satellites whose cells are to be measured, SMTC configurations, the timestamps when the ephemeris and/or SMTC configurations are valid, and the reference locations for each cell to be measured (where the same reference location preferably is used for all cells to be measured). Then it is left to the UE to estimate the appropriate adjustment of the provided SMTC window by attempting to estimate the impact of the UE's own location's deviation from the reference location. To facilitate for the UE to obtain this estimate, the gNB may indicate the Return Trip Time (RTT) between the reference location and the serving satellite (or the Timing Advance (TA) to be used at the reference location when transmitting towards the serving satellite, where this TA also can be derived from the RTT). In addition, the gNB may indicate the expected Doppler shift of downlink transmissions at the reference location. This additional information, i.e. the RTT (or TA) and possibly downlink Doppler shift at the reference location, may be used by the UE to estimate the distance and direction from the UE to the reference location. Based on that (and the ephemeris data of the involved satellites), the UE adjusts the provided SMTC window timing (e.g. adjusts the offset), e.g. for each satellite or for each cell to be measured.

### Further embodiments

In a particular embodiment, a measurement object is used for measurement of cells associated with the same satellite. The measurement object includes the timestamp, which defines the point in time for which the SMTC window configuration is valid, and the satellite's ephemeris data (such as the satellite's position and velocity vector at the time indicated by the timestamp).

In another particular embodiment, a measurement object is used for measurement of cells associated with more than one satellite. In this case, the measurement object indicates the list of cells associated with each satellite, as well as each satellite's ephemeris data and the aforementioned timestamp.

In a related embodiment, the network keeps track of how the SMTC windows and measurement gaps shift on the UE side, in order to be able to respect the scheduling restrictions due to the measurement gaps. The network may estimate the UE's position or request the UE to report its position for such tracking. Depending on the expected position estimation accuracy, the network may need to add some internal time margins when scheduling due to the inaccuracy of the network's estimate of the UE's perception of SMTC windows and measurement gaps as well as the possible movements of the UE itself.

In another particular embodiment, the UE signals to the network a "need for gaps" which concerns NTN specific timing adjustment need between cells from different satellites, or just different cells in case the UE is not aware of which satellite a cell is coming from. There are several options for specifying this signaling. In a further particular embodiment, the UE informs the network on the mentioned timing differences affecting measurement gap or SMTC configuration when the UE connects to a cell. This may be included in "UE assistance information message" UEAssistanceInformation which is signaled via SRB1. Optionally, the UE may also subsequently (later) update this information, e.g. using RRC signaling. This information may also be obtained by the network by the request response mechanism. In this case, network sends a query in UEInformationRequest message via SRB1 and the UE responds in UEInformationResponse message via SRB1 or SRB2. After the network has this information, the network configures measurement gaps and/or RRM measurements with the needed SMTC(s) correspondingly.

The timestamp indicating when the SMTC and possible measurement gap configurations are valid may be explicit, or, as an alternative, implicit, being equivalent to the time of reception at the UE or the time corresponding to the SFN, slot and first symbol of the transmission providing the SMTC window configuration(s). In another particular embodiment, if the UE is supposed to measure cells from the serving satellite, the timestamp is not needed and can be omitted.

The UE may need to perform system frame number (SFN) and frame timing difference (SFTD) measurement. In another particular embodiment, for reporting of a SFTD measurement result, the UE includes a timestamp, which defines the point in time for which the SFTD measurement is valid.

In a particular embodiment, the network signals a timer value to the UE, along with the timestamp (which may be implicit as described above). The UE is permitted to adjust the measurement gap and SMTC window timing until the timer expires. The UE is expected to obtain a fresh SMTC and measurement gap configuration from the network after the timer expires.

In many of the embodiments above, the SMTC window and corresponding measurement gap configurations accompany each other. However, in all these embodiments, variations are possible, in which the SMTC window may be configured without an accompanying measurement gap configuration. One example where such variations may be beneficial is when the SMTC is provided for intra-frequency measurements.

### Reference Location

As mentioned above, in some scenarios, the SMTC provided to a UE is associated with a reference location representing the spatial point where the SMTC is nominally valid. The SMTC information could thus be interpreted or used differently depending on the indicated reference location and/or the nature of the definition of the reference location. For instance, if the reference location is the transmitter, the UE should add the propagation delay from the transmitter (which may be substantial in case of a satellite-born transmitter) when applying the SMTC configuration for SSB scanning and measurement. To this end, a suite of embodiments is provided, wherein such SMTC information could be provided in different flavors or variants, where the difference between the flavors/variants is that different SMTC reference points are used. In these embodiments, the SMTC could be provided with the reference point being the transmitter at the satellite, the gNB (i.e. the ground station in the case of the bent-pipe architecture), the UE (as estimated by the network), a reference point on the ground (e.g. the cell center in an Earth-fixed cell) possibly explicitly indicated with GNSS coordinates (or other types of geographical coordinates), a reference point associated with a cell of a carrier frequency/network/system, e.g. the cell center of a moving cell, or a reference location in the current cell, i.e. the cell in which the UE receives the signaling carrying the reference location indication.

### Considerations of the movements of the satellites

In cases where the reference location is a point on the ground, such as, for example, where a point in the center of an Earth-fixed cell, the propagation delay from the transmitter of the SSB to be measured to the reference location will vary with time because of the movement of the transmitter (satellite, HAPS, etc.) and this affects the nominal SMTC. For instance, if the transmitter is moving in a direction that shrinks the distance to the reference location, the times of the SMTC (such as periodicity and duration) will be compressed and vice versa when the transmitter is moving away from the reference location. This may affect the creation of the SMTC and/or its interpretation. The SMTC could represent a "frozen moment in time" or it could be adapted to the movement of the satellite, which would mean that the periodicity would be somewhat distorted, albeit in a predictable time-dependent way. It could also be a combination with a nominal SMTC being valid for a certain point in time and then additional information indicating how the SMTC should be adapted (due to the movement of the transmitter) at the reference location (or at the UE's location) as time passes (and the transmitter moves). Alternatively, the SMTC information does not take transmitter movement into account at all but leaves it to the UE to calculate and apply adaptation of the SMTC as needed, based on knowledge of the transmitter movement which can be derived from ephemeris data.

In other embodiments, the SMTC information may be extended with a scalingFactor due to movement of the satellite the SMTC concerns. The scalingFactor should be applied to the periodicity and duration of the SMTC window to derive the actual periodicity and duration when the satellite's movement (speed and direction) is taken into account. The scalingFactor will thus be smaller than one (i.e. < 1) when the concerned satellite is moving towards the UE and greater than one (i.e. > 1) when the satellite is moving away from the UE.

The SMTC may be satellite specific (e.g. represented by a cell list comprising cells served by the same satellite), cell specific or carrier frequency specific. Or the SMTC may be carrier frequency specific but with a satellite (e.g. represented by a cell list comprising cells served by the same satellite) specific scalingFactor.

The scalingFactor, or other NTN-specific (possibly new) aspects of SMTC information, such as parameters depending in the propagation delay between the UE and the satellite, may change rather frequently. Therefore, when these parameters are provided in the system information, an option is to allow changes of them without triggering SI update notification, in a particular embodiment. Other embodiments could be to provide multiple values of the affected parameters, such as a scalingFactor, and also indicate the time periods during which the respective values are valid. Another way is to only provide one value, but also an indication of when it will be updated (but not to what it will be updated). Yet another way would be to describe the change over time of a concerned parameter, such as the scalingFactor, as a mathematical function of time (and let the UE calculate the parameter's change over time as needed).

Finally, it should be noted that the NTN definition includes not only satellites, but also HAPS. Accordingly, though the term "satellite" is used throughout this disclosure, all solutions, methods, and techniques disclosed herein are fully applicable also to HAPS.

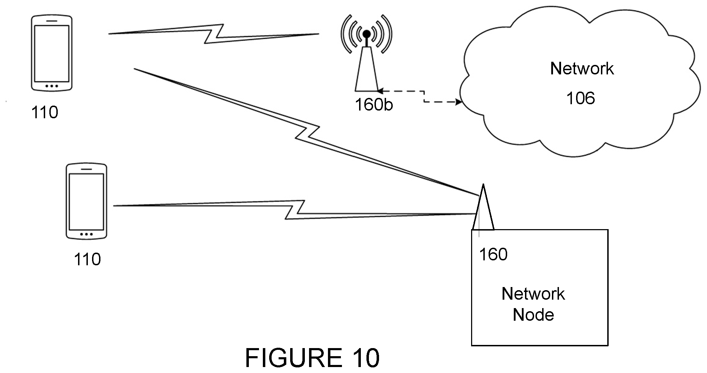

FIGURE 10 illustrates a wireless network in accordance with some embodiments. Although the subject matter described herein may be implemented in any appropriate type of system using any suitable components, the embodiments disclosed herein are described in relation to a wireless network, such as the example wireless network illustrated in FIGURE 10. For simplicity, the wireless network of FIGURE 10 only depicts network 106, network nodes 160 and 160b, and WDs 110. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

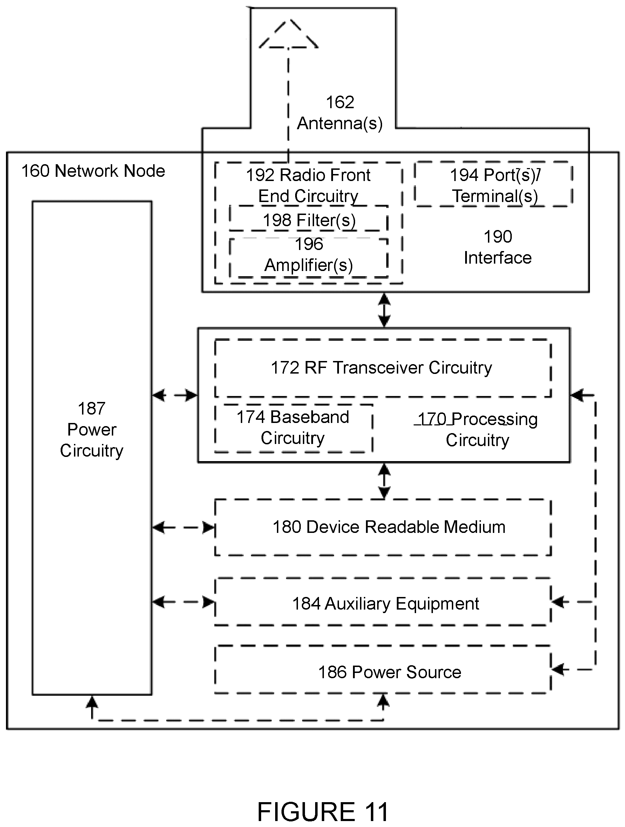

FIGURE 11 illustrates an example network node 160, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 11, network node 160 includes processing circuitry 170, device readable medium 180, interface 190, auxiliary equipment 184, power source 186, power circuitry 187, and antenna 162. Although network node 160 illustrated in the example wireless network of FIGURE 11 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units.

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 11 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

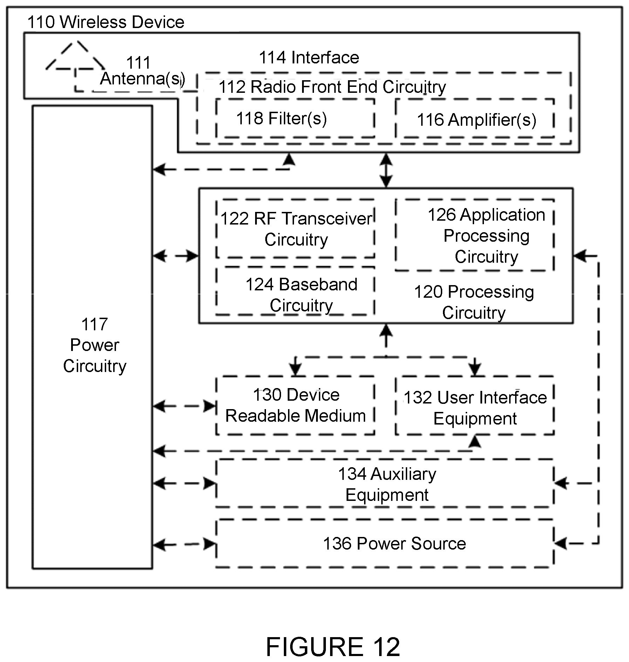

FIGURE 12 illustrates an example wireless device 110, according to certain embodiments. As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

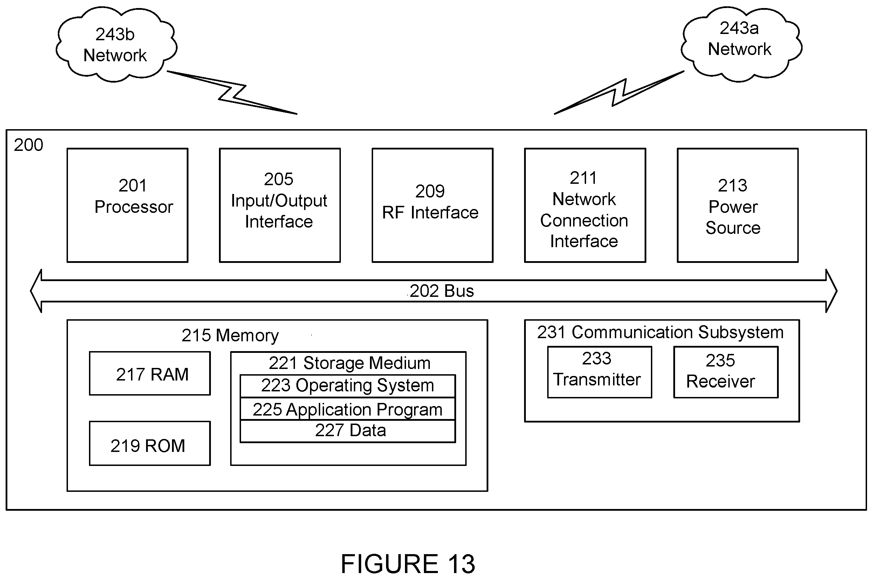

FIGURE 13 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 13, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 13 is a UE, the components discussed herein are equally applicable to a WD, and vice-versa.

In FIGURE 13, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 13, or only a subset of the components. The level of integration between the components may vary from one UE to another UE. Further, certain UEs may contain multiple instances of a component, such as multiple processors, memories, transceivers, transmitters, receivers, etc.

In FIGURE 13, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 13, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 13, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

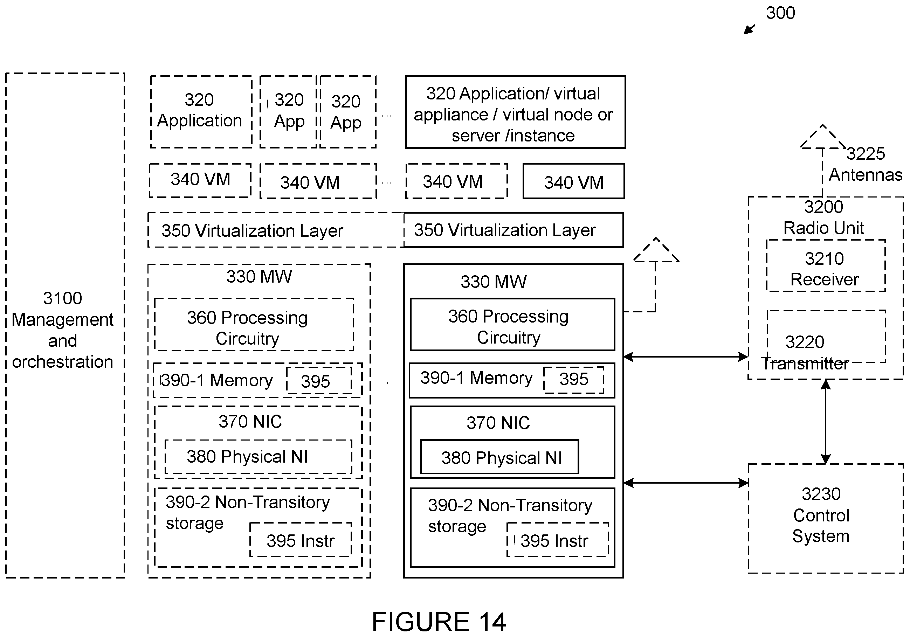

FIGURE 14 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 14, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 14.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

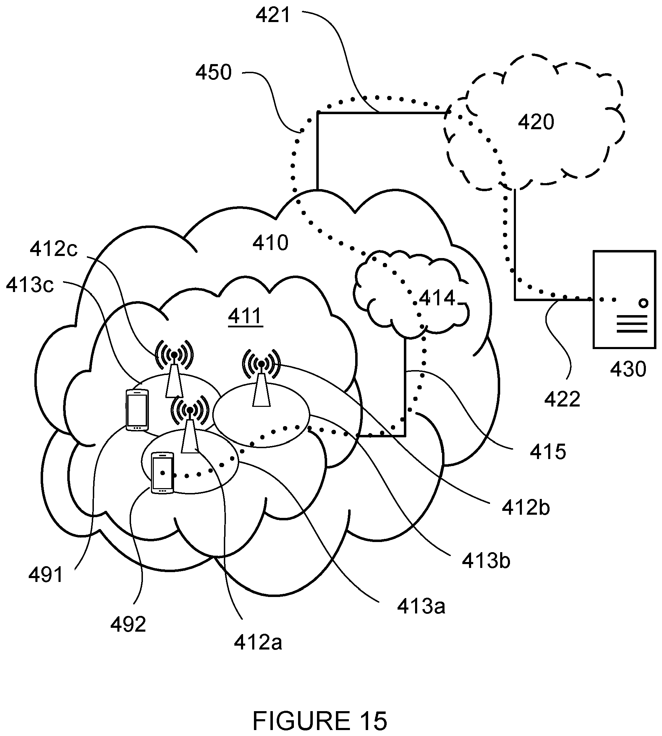

FIGURE 15 illustrates a telecommunication network connected via an intermediate network to a host computer in accordance with some embodiments. With reference to FIGURE 15, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 15 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

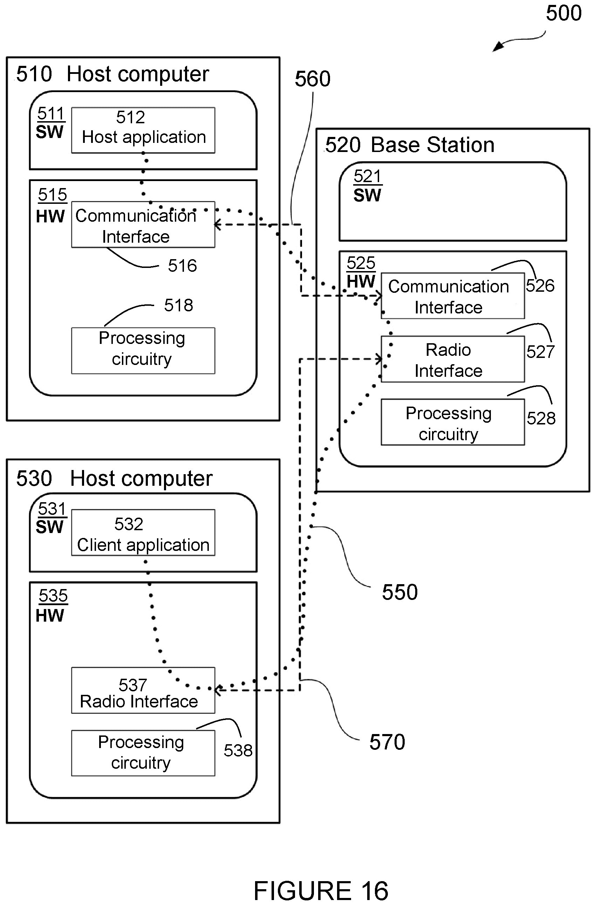

FIGURE 16 illustrates a host computer communicating via a base station with a user equipment over a partially wireless connection in accordance with some embodiments

Example implementations, in accordance with an embodiment, of the UE, base station and host computer discussed in the preceding paragraphs will now be described with reference to FIGURE 16. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 16) served by base station 520. Communication interface 526 may be configured to facilitate connection 560 to host computer 510. Connection 560 may be direct or it may pass through a core network (not shown in FIGURE 16) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 16 may be similar or identical to host computer 430, one of base stations 412a, 412b, 412c and one of UEs 491, 492 of FIGURE 15, respectively. This is to say, the inner workings of these entities may be as shown in FIGURE 16 and independently, the surrounding network topology may be that of FIGURE 15.

In FIGURE 16, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the efficiency with which a UE connects to a base station, in particular an NTN base station. This improved efficiency may provide benefits such as improved connection times and reduced battery consumption allowing the user to access data quicker and longer.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

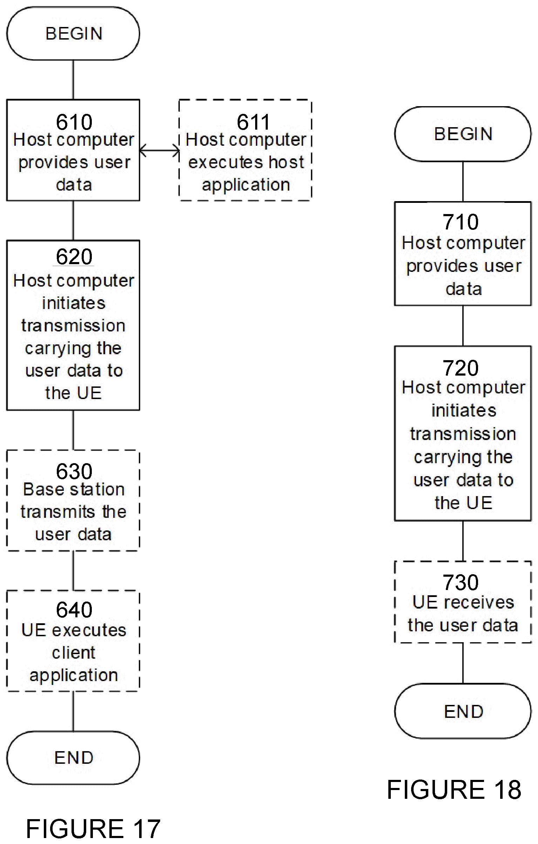

FIGURE 17 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 17 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 18 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 18 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

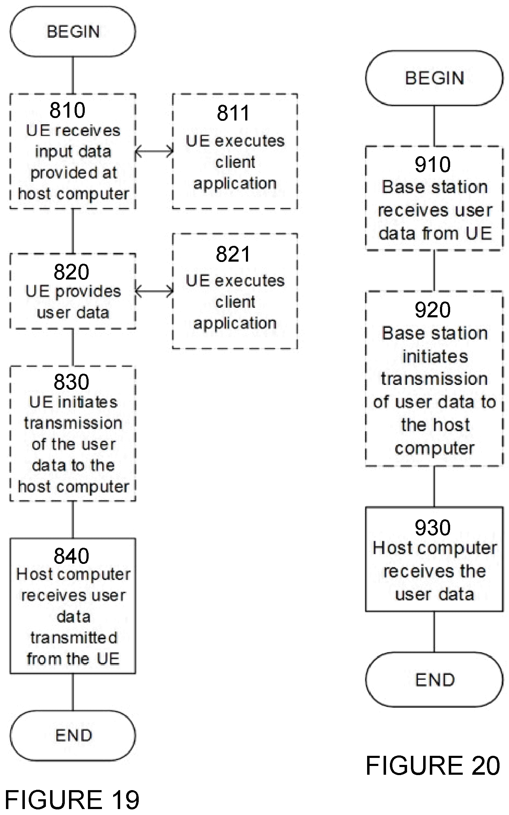

FIGURE 19 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 19 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 20 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 20 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

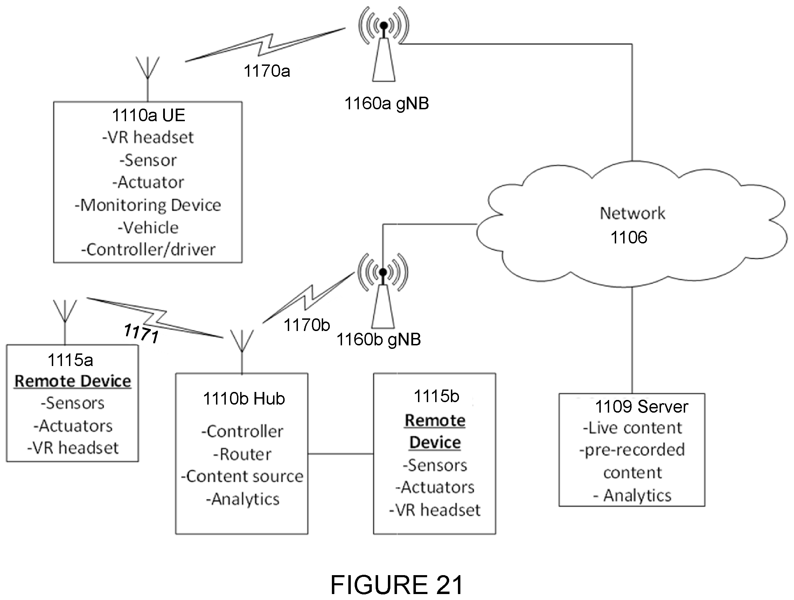

FIGURE 21 depicts a wireless network comprising different devices connected, either directly or indirectly, to the wireless network through one or more access network nodes, such as gNBs 1160a and 1160b. In particular, the wireless network includes access network nodes such as gNBs 1160a and 1160b, UE 1110a, hub 1110b, remote devices 1115a and 1115b and server 1109. UE 1110a and hub 1110b may be any of a wide variety of devices capable of communicating wirelessly with gNBs 1160's. Although hub 1110b is referred to as a hub, it may also be considered a UE (with hub functionality) because it is able to communicate wirelessly with gNB 1160b using a standard protocol, for example a wireless standard such as one provided by 3GPP. In fact, each of the devices illustrated in FIGURE 21 represent a wide variety of different devices that can be used in different scenarios as discussed in more detail below. Any of these devices which are able to communicate wirelessly with a gNB, eNB or any other similar 3GPP access node may be considered a wireless device or UE.

Looking now at some of the possibilities, UE 1110a may be any of a variety of different devices that are able to wirelessly communicate with gNB 1160a. Some examples, which are listed in FIGURE 21, include a virtual reality (VR) headset, a sensor, an actuator, a monitoring device, a vehicle, or a remote controller. These examples are not exhaustive and include therein a wide variety of more specific devices, including a wide range of Internet of Things (IoT) devices. For example, in embodiments where UE 1110a is a VR headset, UE 1110a may be a cell phone that is used with a head mount or it may be a standalone or dedicated VR headset. In some embodiments UE 1110a may be an augmented reality (AR) headset. As an AR or VR headset UE 1110a may be used for entertainment (e.g., gaming, videos, etc.), education/business (e.g., remote conferences, virtual lectures, etc.), medical (e.g., remote diagnostic, patient consultation, etc.), or any other use in which virtual or augmented content may be provided to a remote user. In any of these cases UE 1110a may be receiving content via wireless connection 1170a with gNB 1160a.

As another example, in embodiments where UE 1110a is a sensor or monitoring device, UE 1110a may be a motion, gravitational, moisture, temperature, biometric, speed, door/window open, smoke, fire, volume, flow, or any other type of device that is able to detect or measure one or more conditions. As a sensor UE 1110a may also be able to capture conditions. For example, UE 1110a may capture images if it comprises a camera or sound if it comprises a microphone. Regardless of the type of sensor, UE 1110a may provide an output via wireless connection 1170a to gNB 1160a. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, in embodiments where UE 1110a is an actuator, UE 1110a may be a motor, switch, or any other device that may change states in response to receiving an input via wireless connection 1170a. For example, UE 1100a may be a vibrator that creates vibration to provide a user with haptic feedback. As another example UE 1100a may be a small motor that adjusts the control surfaces of a drone in flight or to a robotic arm performing a medical procedure. As another example, UE 1100a may be a switch that remotely turns on another device, such as a light.

As another example, in embodiments where UE 1110a is a vehicle, UE 1110a may be a drone, car, plane, ship, train, tractor, robot, or any other type of device comprising one or more sensors and/or actuators that may change its locations whether autonomously or at the direction of a user. In such embodiments where UE 1110a is a remotely controlled vehicle, such as a drone, it may receive instructions on movement, actuating, or sensing from a user via wireless connection 1170a and provide location, sensor or video information back to the user via wireless connection 1170a. In such embodiments where UE 1110a is an autonomous vehicle it may receive alerts and other messages from other vehicles and/or infrastructure sensors via wireless connection 1170a as well provide its own telemetry data to others via wireless connection 1170a.

As another example, in embodiments where UE 1110a is a remote control, UE 1110a may be a device dedicated to controlling other devices or a general purpose computer with a program or application that provides control of other devices. UE 1110a may send commands to a remote device via wireless connection 1170a. UE 1110a may also receive feedback, telemetry, or other information from the remote device via wireless connection 1170a. UE 1110a may present this received information to a user who may then issue commands for the remote device. For example, UE 1110a may receive via wireless connection 1170a a video signal from a remote surgical room and then issue commands via wireless connection 1170a to a remote surgical machine that can execute the commands.

While only a single UE 1110a is illustrated in FIGURE 21, in practice any number of UEs may be used together with respect to a single use case. For example, a first UE 1110a may be a speed sensor used in a drone which provides the drone's speed information to a second UE 1110a that is a remote control operating the drone. When the user makes changes from the remote control, a third UE 1110a that is an actuator may adjust a throttle on the drone to increase or decrease the speed. Similarly, in the example above, the first (sensor) and third (actuator) UE 1110a's may be a single UE that handles communication for both the speed sensor and the actuators or UE 1 110a may comprise one or more of the above. Similarly, in the example above, a hub, such as hub 1110b, may be used to handle communication between the sensors and actuators and the controller.

Hub 1110b may be any of a variety of different devices that provides wireless access to gNB 1160b for one or more remote devices 1115a. Some examples of different types of hubs are listed in Figure QAA and include a controller, router, content source and analytics. Hub 1110b may include memory to store data (e.g., video, audio, images, buffer, sensor data, file share) that is collected from, or is to be provided to, remote device 1115a. Hub 1110b hub may include a processor, operating system, and server functionality. Hub 1110b may include components for wireless communication to enable wireless connection 1171 to remote device 1115a and/or components for a fixed connection to remote device 1115b. Hub 1110b may also include routing capabilities, firewall capabilities, a VPN-server or VPN-client. Hub 1110b may also allow for a different communication scheme and/or schedule between hub 1110b and remote devices 1115 and between hub 1110b and network 1106.

As one example, hub 1110b may be a broadband router enabling direct or indirect access to network 1106 for remote device 1115a. In certain embodiments, hub 1110b may facilitate communication between remote devices 1115a and 1115b. This may be done with, or without, the communications passing through network 1106. In some embodiments, hub 1110b may simply forward the data from remote device 1115a or 1115b to network 1106. In some embodiments, hub 1110b may first filter, buffer, store, analyze or collate the data from remote device 1115a or 1115b before sending on the data to network 1106 or another remote device. Similarly, the data from network 1106 may pass directly through hub 1110b or it may first be processed by hub 1110b on the way to remote device 1115a or 1115b.

As another example, hub 1110b may be a controller that sends commands or instructions to one or more actuators in remote device 1115a. The commands or instructions may be received from a second remote device 1115b, from gNB 1160b or by executable code, script or process instructions in hub 1110b.

As another example, hub 1110b may be a collection place for data from one or more remote devices 1115a and/or 1115b. For example, remote devices 1115a and/or 1115b may be a sensor, a camera, measurement equipment, or any other type of device discussed herein that may provide output or receive input. Hub 1110b may act as a temporary storage for data from, for example remote device 1115b and, in some embodiments, may perform analysis, or other processing on the data. Hub 1110b may have a constant/persistent or intermittent connection to gNB 1160b.

As another example, hub 1110b may be a content source. For example, when remote device 1115a is a VR headset, display, loudspeaker or other media delivery device, hub 1110b may retrieve VR assets, video, audio, or other media via gNB 1160b which it then provides to remote device 1115a either directly, after some local processing, and/or after adding additional local content.

Remote device 1115a may be any of a variety of different devices, for example, remote device 1115a may be a device comprising one or more of sensors, actuators, and/or a screen. Remote device 1115a may alternatively be a VR (or AR) headset, a Machine-2-Machine (M2M) device, an IoT device, an internet of Everything (IoE) device, or any other type of device which is capable of accessing a communication network wirelessly via a hub or a device capable of acting as a hub, which in the present context comprise providing network access to a device which is not able to communicate directly with communication network 1106 via gNB 1160a or 1160b. In some scenarios, remote device 1115a may be able to establish a wireless connection with gNB 1160a or 1160b yet nonetheless still connects via hub 1 110b. Remote device 1115b may be similar to remote device 1115a in most respects except that it has a wired connection to hub 1110b rather than a wireless connection, such as wireless connection 1171.

gNBs 1160a and 1160b may provide various wireless devices such as UE 1110a and hub 1110b with wireless access to network 1106. Network 1106 may connect the various devices illustrated in FIGURE 21 including server 1109 which may host a variety of applications such as live and pre-recorded content, data collection services such as retrieving and compiling data on various ambient conditions detected by a plurality of remote devices 1115a, 1115b or UE 1110a, analytics functionality, social media, functions for controlling or otherwise interacting with remote devices, functions for an alarm and surveillance center, or any other such function done by a server. For example, factory status information may be collected and analyzed by server 1109. As another example, server 1109 may process audio and video data which may have been retrieved from UE 1110a for use in creating maps. As another example, server 1109 may collect and analyze real-time data to assist in controlling vehicle congestion (e.g., controlling traffic lights). As another example, server 1109 may store surveillance video uploaded by remote device 1115b via hub 1110b. As another example, server 1109 may store media content such as video, audio, VR, or AR which it can broadcast, multicast or unicast to remote devices such as UE 1110a or remote device 1115a. As other examples, server 1109 may be used for energy pricing, for remote control of non-time critical electrical load to balance power generation needs, location services, presentation services (such as compiling diagrams etc. from data collected from remote devices), or any other function of collecting, retrieving, storing, analyzing and/or transmitting data.

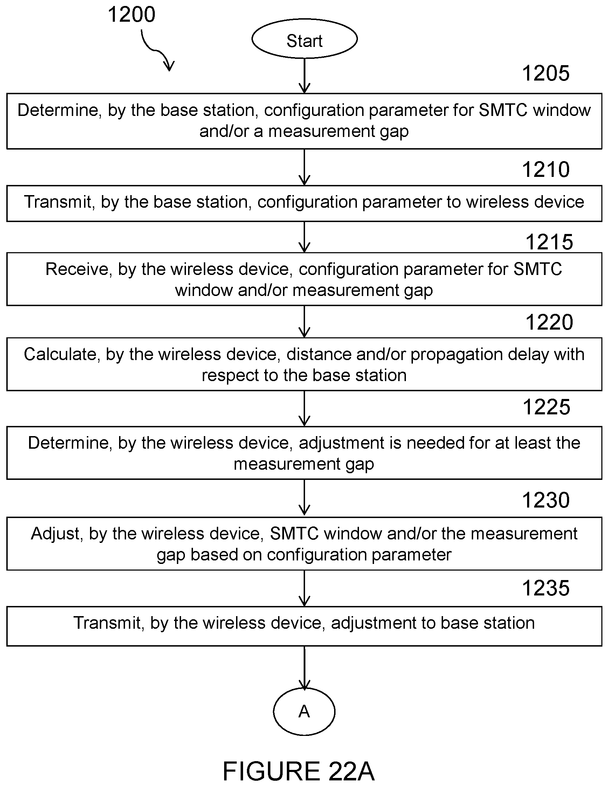

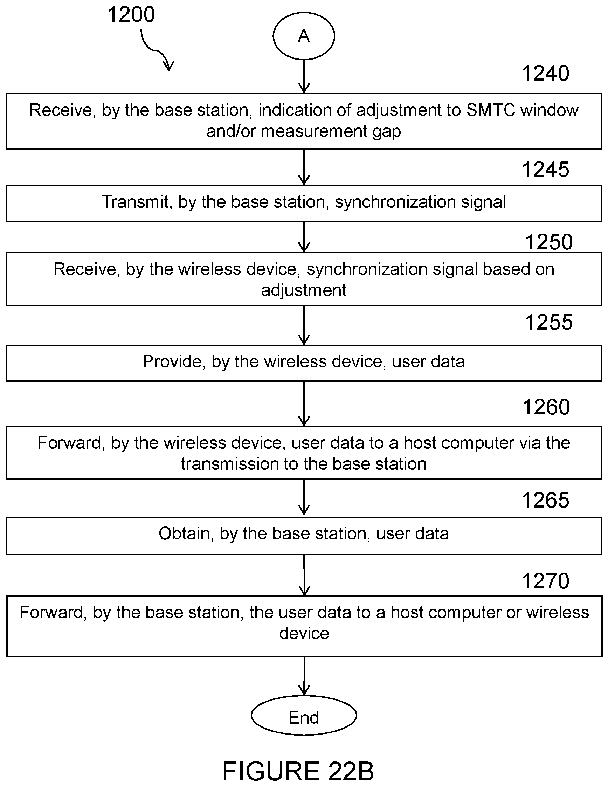

FIGURES 22A-22B depict a method in accordance with particular embodiments. For purposes of simplicity FIGURES 22A-22B combine steps performed by a base station as well as steps performed by a wireless device. However, in practice, certain embodiments may only include steps performed by a base station or only steps performed by a wireless device. The method begins at step 1205 with the base station determining at least one configuration parameter for an SMTC window and/or a measurement gap for a first wireless device. The base station may be a non-terrestrial base station. The configuration parameter can be used to adjust the time when the wireless device attempts to receive at least one synchronization signal.

At step 1210 the base station transmits the configuration parameter to the wireless device. In some embodiments, not depicted in the flow chart above, the base station may use the configuration parameter to calculate an estimated adjustment for at least one of the SMTC or the measurement gap for the wireless device. In some embodiments this may be done after receiving the wireless devices location or position. In some embodiments, the estimated adjustment may be used to anticipate the adjustments the wireless device will make. In some embodiments, the estimated adjustments may be sent to the wireless device to save the wireless device from having to make the calculations on its own.

At step 1215 the wireless device receives at least one configuration parameter for an SMTC window and/or a measurement gap from the base station. In some embodiments, the at least one configuration parameter comprises one or more timestamps, one or more ephemeris data, one or more wireless device position information, and/or one or more reference positions for a cell associated with the base station.

At step 1220 the wireless device calculates at least one of a distance and a propagation delay with respect to the base station. This may be done using information provided in the at least one configuration parameter sent at step 1210.

At step 1225 the wireless device determines that an adjustment is needed for at least the measurement gap. In some embodiments it may also determine that an adjustment is needed to the SMTC window in addition to, or instead of, determining that an adjustment is needed for the measurement gap. The need for the adjustment may be determined based on the configuration parameter sent by the base station at step 1210 and the calculations made at step 1220.

At step 1230 the wireless device adjusts the SMTC window and/or the measurement gap based on the at least one configuration parameter and/or the calculated distance and propagation delay from step 1220. In some embodiments, the adjustment may comprise selecting an adjustment from a list of adjustments. In some embodiments, the adjustment may comprise an offset from a starting gap pattern. In some embodiments the adjustment may comprises a change to a length of a gap window.

At step 1235 the wireless device transmits the adjustment to the SMTC window and/or the measurement gap to the base station. In some embodiments, transmitting the adjustment to the base station may comprise transmitting an index value associated with the adjustment.

At step 1240 the base station receives the indication of the adjustment made by the wireless device to the SMTC window and/or the measurement gap.

At step 1245 the base station transmits at least one synchronization signal. The transmitted synchronization signal may be adjusted based on the indication received at step 1240.

At step 1250 the wireless device receives the synchronization signal transmitted by the base station at step 1245. In some embodiments the synchronization signal is received based on the adjustment to the SMTC window and/or the measurement gap. The synchronization signal may comprise multiple signals or beams.

Once the synchronization signal has been received and the wireless device is connected to the base station, data may be transferred between the two devices. At step 1255 the wireless device provides some user data that it then forwards to the base station at step 1260. The base station receives this user data, or data that is to be sent to wireless device at step 1265 and then forwards it on to a host computer or the wireless device, respectively, at step 270.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

FIGURE 23 illustrates an example method 1300 by a wireless device 110 for a SMTC window and measurement gap configuration, according to certain embodiments. The method begins at step 1305, when the wireless device 110 receives at least one configuration parameter for the SMTC window and/or a measurement gap from a network. At step 1310, the wireless device 110 performs an adjustment of the SMTC window and/or the measurement gap based on the at least one configuration parameter. At step 1315, the wireless device 110 transmits the adjustment to the network. At step 1320, the wireless device 110 measures at least one synchronization signal based on the adjustment to the SMTC window and/or the measurement gap.

In a particular embodiment, the wireless device 110 receives the at least one configuration parameter from a base station and/or satellite associated with at least one synchronization signal.

In a particular embodiment, the wireless device 110 transmits the adjustment to a serving base station and/or satellite.

In a particular embodiment, based on the information provided in the at least one configuration parameter, the wireless device 110 calculates a propagation delay with respect to a base station associated with the at least one synchronization signal. The at least one of the SMTC window or the measurement gap is adjusted based on the propagation delay.

In a particular embodiment, the network comprises a non-terrestrial base station.

In a particular embodiment, the at least one configuration parameter comprises at least one of: one or more timestamps, one or more ephemeris data, position information associated with the wireless device, and one or more reference positions for a cell associated with the at least one synchronization signal.

In a particular embodiment, the wireless device 110 selects the adjustment from a list of adjustments and transmits an index value associated with the adjustment selected from the list of adjustments.

In a particular embodiment, when performing the adjustment, the wireless device 110 applies an offset for starting a gap pattern.

In a particular embodiment, when performing the adjustment, the wireless device 110 applies a change to a length of a gap.

In a particular embodiment, the wireless device is configured to receive synchronization signals from a plurality of base stations, and the transmissions from the plurality of base stations are synchronized with respect to a location of the wireless device. A single SMTC window and/or a single measurement gap is configured for the plurality of base stations, and when performing the adjustment, the wireless device 110 adjusts the single SMTC window and/or the single measurement gap configured for the plurality of base stations.

In a particular embodiment, the wireless device is configured to receive synchronization signals from a plurality of base stations, and the transmissions from the plurality of base stations are not synchronized with respect to a location of the wireless device. The wireless device 110 is configured with a plurality of SMTC windows and/or a plurality of measurement gaps, and each of the plurality of SMTC windows and/or measurement gaps are configured for a respective one of the plurality of base stations. The wireless device 110 performs the adjustment comprises performing the adjustment to a particular one of the SMTC windows and/or measurement gaps that is associated with the respective one of the plurality of base stations.

FIGURE 24 illustrates an example method 1400 by a network node 160 such as, for example, a base station for SMTC window and measurement gap configuration, according to certain embodiments. The method begins at step 1405 when the network node 160 transmits, to at least one wireless device 110, at least one configuration parameter for the SMTC window and/or a measurement gap. The configuration parameter is associated with a time when the at least one wireless device is to attempt to receive at least one synchronization signal. At step 1410, the network node 160 receives, from the at least one wireless device 110, an indication that the at least one wireless device has made an adjustment to at least one of the SMTC window or the measurement gap. At step 1415, the network node 160 transmits the at least one synchronization signal based on the adjustment made by the wireless device 110.

In a particular embodiment, the network node 160 configures the wireless device 110 to calculate a propagation delay based on the information provided in the at least one configuration parameter and adjust at least one of the SMTC window or the measurement gap based on the propagation delay.

In a particular embodiment, the network comprises a non-terrestrial base station.

In a particular embodiment, the at least one configuration parameter comprises at least one of: one or more timestamps, one or more ephemeris data, position information associated with the at least one wireless device, and one or more reference positions for a cell associated with the at least one synchronization signal.

In a particular embodiment, the configuration comprises a list of adjustments, and the indication from the at least one wireless device comprises an index value indicating the adjustment selected from the list of adjustments.

In a particular embodiment, the adjustment comprises an offset for a starting gap pattern.

In a particular embodiment, the adjustment comprises a change to a length of a gap.

In a particular embodiment, the network node receives a position associated with the at least one wireless device and calculates an estimated adjustment for at least one of the SMTC or the measurement gap based on the position of the at least one wireless device. The network node 160 transmits the at least one synchronization signal based on the estimated adjustment.

In a particular embodiment, a single SMTC window and/or a single measurement gap is configured for a plurality of base stations, and the at least one synchronization signal is transmitted in synchronization with at least one additional synchronization signal transmitted by the at least one additional base station.

### EXAMPLE EMBODIMENTS

### Group A Embodiments

Example Embodiment 1. A method performed by a wireless device for SMTC window and measurement gap configuration, the method comprising: receiving at least one configuration parameter for an SMTC window and/or a measurement gap from a base station; adjusting the SMTC window and/or the measurement gap based on the at least one configuration parameter; and receiving at least one synchronization signal based on the adjustment to the SMTC window and/or the measurement gap.

Example Embodiment 2. The method of Example Emboidment 1 wherein the base station is a non-terrestrial base station.

Example Embodiment 3. The method of any of Example Embodiments 1-2 wherein the at least one configuration parameter comprises one or more timestamps, one or more ephemeris data, one or more wireless device position information, and/or one or more reference positions for a cell associated with the base station.

Example Embodiment 4. The method of any of Example Embodiments 1-3 further comprising: calculating at least one of a distance and a propagation delay with respect to the base station using information provided in the at least one configuration parameter; and adjusting at least one of the SMTC window or the measurement gap based on the calculations.

Example Embodiment 5. The method of any of Example Embodiments 1-4 further comprising: determining that an adjustment is needed for at least the measurement gap transmitting the adjustment to the base station.

Example Embodiment 6. The method of Example Embodiment 5 wherein: determining that the adjustment is needed comprises selecting the adjustment from a list of adjustments; and transmitting the adjustment to the base station comprises transmitting an index value associated with the selected adjustment.

Example Embodiment 7. The method any of Example Embodiments 5-6 wherein the adjustment comprises an offset from a starting gap pattern.

Example Embodiment 8. The method of any of Example Embodiments 5-6 wherein the adjustment comprises a change to a length of a gap window.

Example Embodiment 9. The method of any of the previous embodiments, further comprising: providing user data; and forwarding the user data to a host computer via the transmission to the base station.

### Group B Embodiments

Example Embodiment 10. A method performed by a base station for SMTC window and measurement gap configuration SMTC window and measurement gap configuration, the method comprising: determining at least one configuration parameter for an SMTC window and/or a measurement gap for a first wireless device, the configuration parameter to be used to adjust the time when the wireless device attempts to receive at least one synchronization signal; transmitting the at least one configuration parameter to the wireless device; and transmitting the at least one synchronization signal.

Example Embodiment 11. The method of Example Embodiment 10 wherein the base station is a non-terrestrial base station.

Example Embodiment 12. The method of any of Example Embodiments 10-11 wherein the at least one configuration parameter comprises one or more timestamps, one or more ephemeris data, one or more wireless device position information, and/or one or more reference positions for a cell associated with the base station.

Example Embodiment 13. The method of any of Example Embodiments 10-12 further comprising: receiving an indication from the wireless device that the wireless device has made an adjustment to at least one of the SMTC window or the measurement gap; and wherein transmitting the at least one synchronization signal comprising transmitting the at least one synchronization signal adjusted based on the adjustment received from the wireless device.

Example Embodiment 14. The method of Example Embodiment 13 wherein the indication from the wireless device comprises an index value associated with the selected adjustment.

Example Embodiment 15. The method any of Example Embodiments 13-14 wherein the adjustment comprises an offset from a starting gap pattern.

Example Embodiment 16. The method of any of Example Embodiments 13-14 wherein the adjustment comprises a change to a length of a gap window.

Example Embodiment 17. The method of any of Example Embodiments 10-16 further comprising: receiving a position associated with the wireless device; calculating an estimated adjustment for at least one of the SMTC or the measurement gap based on the position of the wireless device; and wherein transmitting the at least one synchronization signal comprises transmitting the at least one synchronization signal based on the estimated adjustment.

Example Embodiment 18. The method of any of the previous embodiments, further comprising: obtaining user data; and forwarding the user data to a host computer or a wireless device.

### Group C Embodiments

Example Embodiment 19. A wireless device for SMTC window and measurement gap configuration, the wireless device comprising: processing circuitry configured to perform any of the steps of any of the Group A embodiments; and power supply circuitry configured to supply power to the wireless device.

Example Embodiment 20. A base station for SMTC window and measurement gap configuration, the base station comprising: processing circuitry configured to perform any of the steps of any of the Group B embodiments; power supply circuitry configured to supply power to the base station.

Example Embodiment 21. A user equipment (UE) for SMTC window and measurement gap configuration, the UE comprising: an antenna configured to send and receive wireless signals; radio front-end circuitry connected to the antenna and to processing circuitry, and configured to condition signals communicated between the antenna and the processing circuitry; the processing circuitry being configured to perform any of the steps of any of the Group A embodiments; an input interface connected to the processing circuitry and configured to allow input of information into the UE to be processed by the processing circuitry; an output interface connected to the processing circuitry and configured to output information from the UE that has been processed by the processing circuitry; and a battery connected to the processing circuitry and configured to supply power to the UE.

Example Embodiment 22. A communication system including a host computer comprising: processing circuitry configured to provide user data; and a communication interface configured to forward the user data to a cellular network for transmission to a user equipment (UE), wherein the cellular network comprises a base station having a radio interface and processing circuitry, the base station's processing circuitry configured to perform any of the steps of any of the Group B embodiments.

Example Embodiment 23. The communication system of the previous embodiment further including the base station.

Example Embodiment 24. The communication system of the previous 2 embodiments, further including the UE, wherein the UE is configured to communicate with the base station.

Example Embodiment 25. The communication system of the previous 3 embodiments, wherein: the processing circuitry of the host computer is configured to execute a host application, thereby providing the user data; and the UE comprises processing circuitry configured to execute a client application associated with the host application.

Example Embodiment 26. A method implemented in a communication system including a host computer, a base station and a user equipment (UE), the method comprising: at the host computer, providing user data; and at the host computer, initiating a transmission carrying the user data to the UE via a cellular network comprising the base station, wherein the base station performs any of the steps of any of the Group B embodiments.

Example Embodiment 27. The method of the previous embodiment, further comprising, at the base station, transmitting the user data.

Example Embodiment 28. The method of the previous 2 embodiments, wherein the user data is provided at the host computer by executing a host application, the method further comprising, at the UE, executing a client application associated with the host application.

Example Embodiment 29. A user equipment (UE) configured to communicate with a base station, the UE comprising a radio interface and processing circuitry configured to performs the of the previous 3 embodiments.

Example Embodiment 30. A communication system including a host computer comprising: processing circuitry configured to provide user data; and a communication interface configured to forward user data to a cellular network for transmission to a user equipment (UE), wherein the UE comprises a radio interface and processing circuitry, the UE's components configured to perform any of the steps of any of the Group A embodiments.

Example Embodiment 31. The communication system of the previous embodiment, wherein the cellular network further includes a base station configured to communicate with the UE.

Example Embodiment 32. The communication system of the previous 2 embodiments, wherein: the processing circuitry of the host computer is configured to execute a host application, thereby providing the user data; and the UE's processing circuitry is configured to execute a client application associated with the host application.

Example Embodiment 33. A method implemented in a communication system including a host computer, a base station and a user equipment (UE), the method comprising: at the host computer, providing user data; and at the host computer, initiating a transmission carrying the user data to the UE via a cellular network comprising the base station, wherein the UE performs any of the steps of any of the Group A embodiments.

Example Embodiment 34. The method of the previous embodiment, further comprising at the UE, receiving the user data from the base station. A communication system including a host computer comprising: communication interface configured to receive user data originating from a transmission from a user equipment (UE) to a base station, wherein the UE comprises a radio interface and processing circuitry, the UE's processing circuitry configured to perform any of the steps of any of the Group A embodiments.

Example Embodiment 35. The communication system of the previous embodiment, further including the UE.

Example Embodiment 36. The communication system of the previous 2 embodiments, further including the base station, wherein the base station comprises a radio interface configured to communicate with the UE and a communication interface configured to forward to the host computer the user data carried by a transmission from the UE to the base station.

Example Embodiment 37. The communication system of the previous 3 embodiments, wherein: the processing circuitry of the host computer is configured to execute a host application; and the UE's processing circuitry is configured to execute a client application associated with the host application, thereby providing the user data.

Example Embodiment 38. The communication system of the previous 4 embodiments, wherein: the processing circuitry of the host computer is configured to execute a host application, thereby providing request data; and the UE's processing circuitry is configured to execute a client application associated with the host application, thereby providing the user data in response to the request data.

Example Embodiment 39. A method implemented in a communication system including a host computer, a base station and a user equipment (UE), the method comprising: at the host computer, receiving user data transmitted to the base station from the UE, wherein the UE performs any of the steps of any of the Group A embodiments.

Example Embodiment 40. The method of the previous embodiment, further comprising, at the UE, providing the user data to the base station.

Example Embodiment 41. The method of the previous 2 embodiments, further comprising: at the UE, executing a client application, thereby providing the user data to be transmitted; and at the host computer, executing a host application associated with the client application.

Example Embodiment 42. The method of the previous 3 embodiments, further comprising: at the UE, executing a client application; and at the UE, receiving input data to the client application, the input data being provided at the host computer by executing a host application associated with the client application, wherein the user data to be transmitted is provided by the client application in response to the input data.

Example Embodiment 43. A communication system including a host computer comprising a communication interface configured to receive user data originating from a transmission from a user equipment (UE) to a base station, wherein the base station comprises a radio interface and processing circuitry, the base station's processing circuitry configured to perform any of the steps of any of the Group B embodiments.

Example Embodiment 44. The communication system of the previous embodiment further including the base station.

Example Embodiment 45. The communication system of the previous 2 embodiments, further including the UE, wherein the UE is configured to communicate with the base station.

Example Embodiment 46. The communication system of the previous 3 embodiments, wherein: the processing circuitry of the host computer is configured to execute a host application; the UE is configured to execute a client application associated with the host application, thereby providing the user data to be received by the host computer.

Example Embodiment 47. A method implemented in a communication system including a host computer, a base station and a user equipment (UE), the method comprising: at the host computer, receiving, from the base station, user data originating from a transmission which the base station has received from the UE, wherein the UE performs any of the steps of any of the Group A embodiments.

Example Embodiment 48. The method of the previous embodiment, further comprising at the base station, receiving the user data from the UE.

Example Embodiment 49. The method of the previous 2 embodiments, further comprising at the base station, initiating a transmission of the received user data to the host computer.

### ADDITIONAL INFORMATION

### Measurements

Overall, it is expected that the NR measurement framework can be reused for NTN. However, 3GPP TR 38.821 mentions one issue regarding the impact of the propagation delay differences between satellites on the SMTC windows. Specifically, Section 7.3.2.1.7 states:
Consider a UE served by a LEO satellite S1, however also within coverage of an incoming LEO satellite S2. The UE should perform measurements of the neighbouring cells originating from S2 for mobility purposes based on the measurement configuration provided to the UE, however the propagation delay difference from the UE to satellite S1 and the UE to satellite S2 may vary significantly.

If the SMTC measurement gap configuration does not consider the propagation delay difference, the UE may miss the SSB/CSI-RS measurement window and will thus be unable to perform measurements on the configured reference signals. This challenge is captured for both GEO and LEO scenarios, and is to be addressed with priority for LEO scenarios.

For Future Study: The scale of this problem in GEO given the stationary nature of GEO satellites.

The distance between the UE and a satellite can vary significantly, depending on the position of the satellite and thus the elevation angle ε seen by the UE. Assuming circular orbits, the minimum distance is realized when the satellite is directly above the UE (ε = 90°), and the maximum distance when the satellite is at the smallest possible elevation angle. Assuming the SSB/CSI-RS transmissions from different satellites are synchronized and transmitted at the same time, they will still arrive at the UE at different times because of the differences in distance and thus propagation delay. Table 1, discussed above, shows the distances between satellite and UE for different orbital heights and elevation angles together with the one-way propagation delay and the maximum propagation delay difference (the difference towards ε = 90°). Note that this table assumes regenerative architecture. For the transparent case, the propagation delay between gateway and satellite needs to be considered as well, unless the base station corrects for that.

If an SMTC window is configured based on the timing of the serving satellite, SSB/CSI-RS transmissions from other satellites might arrive at the UE outside the configured SMTC measurement window, which means that the UE will miss the reference signals and will not be able to perform the measurements.

A simple solution to solve this issue and to allow the UE to measure reference signals from another satellite is to configure the UE with a larger SMTC window. The length has to be large enough so that the transmissions from all satellites fall into the window despite the different propagation delays. According to TR 38.331, a length of up to 5 subframes can be configured for the SMTC window. Comparing with the values in the table, it can be seen that this is barely enough for the 600 km case. For the 1200 km case, it works only if a minimum elevation angle of 30° is assumed. For GEO, the propagation delay difference is larger than the SMTC window in all cases. (It could be argued, though, that the GEO case is not relevant. The coverage of a GEO satellite is so large, covering whole continents, that a UE will rarely - if ever - encounter a situation where it would need to do measurements of another GEO satellite. It might still be interesting for cases of a mixed GEO/LEO network.)

But increasing the length of the SMTC window to cover the propagation delay difference is a waste of valuable time resources and thus an unsuitable solution. A better solution would be to configure different SMTC windows for different satellites. This requires that the network is aware of the different propagation delays. What complicates the problem is that the propagation delay differences will shift with the movement of the satellites. In the example shown in FIGURE 3, discussed above, there are two satellites S1 and S2, in a 1200 km orbit. At t=0, S1 is directly above the UE while S2 is at an elevation angle of 30°. The propagation delays are 4 ms and 6.7 ms, respectively. Signals transmitted at the same time arrive 2.7 ms earlier from S1 than from S2. At t=1, the UE sees both satellites under an elevation angle of 60°, and the propagation delay is 4.5 ms towards both S1 and S2. At this point, signals transmitted at the same time also arrive at the same time at the UE. Finally, at t=2, the situation is reversed compared to t=0. Now signals from S2 arrive 2.7 ms earlier than from S1 if they are transmitted at the same time.

A possible solution would be the following procedure:
1) The network configures a separate SMTC window for each satellite the UE is supposed to measure. (This is already possible according to specifications.) It determines the correct timing using knowledge about the positions of the satellites and the UE.
2) The SMTC window configuration includes a timestamp, which defines the point in time for which this configuration is valid.
3) The network also provides ephemeris data for all relevant satellites to the UE.
4) Using the timestamp and ephemeris data, the UE can then recalculate the distances and propagation delays as needed and adjust the SMTC windows accordingly.

The network should respect the scheduling restrictions due to these windows, i.e. keep track of how the windows shift on the UE side. In the previous sections, the following observations were made:
Observation 1............ Ephemeris data does not have a single validity time. Instead, its validity depends on the intended use.
Observation 2 ............... At least in FR1, for the purpose of TA calculation, ephemeris data does not have to be updated during a satellite pass.
Observation 3 .. Care needs to be taken, when choosing the ephemeris data format and related procedures, to make sure the precision requirements can be met.

Based on the discussion above, the following is proposed:
Proposal 1 Ephemeris data needs to come with a timestamp of some sort, that allows a UE to determine the age of the data and request new data, if necessary.
Proposal 2 For FR2, further studies seem motivated to ensure that a UE can determine the satellite position with sufficient accuracy when using up-to-date ephemeris data.
Proposal 3 Ephemeris data about the current satellite should be provided in SIB1.
Proposal 4 Ephemeris data about neighboring cells/satellites could be provided in an additional NTN-specific SIB.
Proposal 5 RAN2 should agree on a format of ephemeris data to be used in NTN.
Proposal 6 The choice of format of the ephemeris data should strive to minimize the amount of data that needs to be transmitted or stored in the UE.

Examples of this disclosure include the following enumerated embodiments:
1. A method performed by a wireless device for a Synchronization Signal Block Measurement Time Configuration, SMTC, window and measurement gap configuration, the method comprising:
   receiving at least one configuration parameter for the SMTC window and/or a measurement gap from a network;
   performing an adjustment of the SMTC window and/or the measurement gap based on the at least one configuration parameter;
   transmitting the adjustment to the network; and
   measuring at least one synchronization signal based on the adjustment to the SMTC window and/or the measurement gap.
2. The method of Embodiment 1, further comprising:
   based on the information provided in the at least one configuration parameter, calculating a propagation delay with respect to a base station associated with the at least one synchronization signal; and
   wherein at least one of the SMTC window or the measurement gap is adjusted based on the propagation delay.
3. The method of any one of Embodiments 1 to 2, wherein the network comprises a non-terrestrial base station.
4. The method of any of any one of Embodiments 1 to 3, wherein the at least one configuration parameter comprises at least one of:
   one or more timestamps,
   one or more ephemeris data,
   position information associated with the wireless device, and
   one or more reference positions for a cell associated with the at least one synchronization signal.
5. The method of any one of Embodiments 1 to 4, further comprising:
   selecting the adjustment from a list of adjustments; and
   transmitting an index value associated with the adjustment selected from the list of adjustments.
6. The method of any one of Embodiments 1 to 5, wherein performing the adjustment comprises applying an offset for starting a gap pattern.
7. The method of any one of Embodiments 1 to 6, wherein performing the adjustment comprises applying a change to a length of a gap.
8. The method of any one of Embodiments 1 to 7, wherein:
   the wireless device is configured to receive synchronization signals from a plurality of base stations,
   the transmissions from the plurality of base stations are synchronized with respect to a location of the wireless device,
   a single SMTC window and/or a single measurement gap is configured for the plurality of base stations, and
   wherein performing the adjustment comprises adjusting the single SMTC window and/or the single measurement gap configured for the plurality of base stations.
9. The method of any one of Embodiments 1 to 7, wherein:
   the wireless device is configured to receive synchronization signals from a plurality of base stations,
   the transmissions from the plurality of base stations are not synchronized with respect to a location of the wireless device,
   the wireless device is configured with a plurality of SMTC windows and/or a plurality of measurement gaps,
   each of the plurality of SMTC windows and/or measurement gaps are configured for a respective one of the plurality of base stations, and
   performing the adjustment comprises performing the adjustment to a particular one of the SMTC windows and/or measurement gaps that is associated with the respective one of the plurality of base stations.
10. A method performed by a base station for Synchronization Signal Block Measurement Time Configuration, SMTC, window and measurement gap configuration, the method comprising:
   transmitting, to at least one wireless device, at least one configuration parameter for the SMTC window and/or a measurement gap, the configuration parameter associated with a time when the at least one wireless device is to attempt to receive at least one synchronization signal;
   receiving, from the at least one wireless device, an indication that the at least one wireless device has made an adjustment to at least one of the SMTC window or the measurement gap; and
   transmitting the at least one synchronization signal based on the adjustment made by the wireless device.
11. The method of Embodiment 10, further comprising configuring the wireless device to:
   calculate a propagation delay based on the information provided in the at least one configuration parameter; and
   adjust at least one of the SMTC window or the measurement gap based on the propagation delay.
12. The method of any one of Embodiments 10 to 11, wherein the network comprises a non-terrestrial base station.
13. The method of any one of Embodiments 10 to 12, wherein the at least one configuration parameter comprises at least one of:
   one or more timestamps,
   one or more ephemeris data,
   position information associated with the at least one wireless device, and
   one or more reference positions for a cell associated with the at least one synchronization signal.
14. The method of any one of Embodiments 10 to 13, wherein:
   the configuration comprises a list of adjustments, and
   the indication from the at least one wireless device comprises an index value indicating the adjustment selected from the list of adjustments.
15. The method of any one of Embodiments 10 to 14, wherein the adjustment comprises an offset for a starting gap pattern.
16. The method of any one of Embodiments 10 to 15, wherein the adjustment comprises a change to a length of a gap.
17. The method of any one of Embodiments 10 to 16, further comprising:
   receiving a position associated with the at least one wireless device;
   calculating an estimated adjustment for at least one of the SMTC or the measurement gap based on the position of the at least one wireless device; and
   transmitting the at least one synchronization signal based on the estimated adjustment.
18. The method of any one of Embodiments 10 to 17, wherein a single SMTC window and/or a single measurement gap is configured for a plurality of base stations, and wherein the at least one synchronization signal is transmitted in synchronization with at least one additional synchronization signal transmitted by the at least one additional base station.
19. A wireless device for Synchronization Signal Block Measurement Time Configuration, SMTC, window and measurement gap configuration, the wireless device comprising:
   processing circuitry configured to:
   receive at least one configuration parameter for the SMTC window and/or a measurement gap from a network;
   perform an adjustment of the SMTC window and/or the measurement gap based on the at least one configuration parameter;
   transmit the adjustment to the network; and
   measure at least one synchronization signal based on the adjustment to the SMTC window and/or the measurement gap.
20. The wireless device of Embodiment 19, wherein the processing circuitry is configured to:
   based on the information provided in the at least one configuration parameter, calculate a propagation delay with respect to a base station associated with the at least one synchronization signal; and
   wherein at least one of the SMTC window or the measurement gap is adjusted based on the propagation delay.
21. The wireless device of any one of Embodiments 19 to 20, wherein the network comprises a non-terrestrial base station.
22. The wireless device of any of any one of Embodiments 19 to 21, wherein the at least one configuration parameter comprises at least one of:
   one or more timestamps,
   one or more ephemeris data,
   position information associated with the wireless device, and
   one or more reference positions for a cell associated with the at least one synchronization signal.
23. The wireless device of any one of Embodiments 19 to 22, wherein the processing circuitry is configured to:
   select the adjustment from a list of adjustments; and
   transmit an index value associated with the adjustment selected from the list of adjustments.
24. The wireless device of any one of Embodiments 19 to 23, wherein when performing the adjustment the processing circuitry is configured to apply an offset for starting a gap pattern.
25. The wireless device of any one of Embodiments 19 to 24, wherein when performing the adjustment the processing circuitry is configured to apply a change to a length of a gap.
26. The wireless device of any one of Embodiments 19 to 25, wherein:
   the wireless device is configured to receive synchronization signals from a plurality of base stations,
   the transmissions from the plurality of base stations are synchronized with respect to a location of the wireless device,
   a single SMTC window and/or a single measurement gap is configured for the plurality of base stations, and
   wherein performing the adjustment comprises adjusting the single SMTC window and/or the single measurement gap configured for the plurality of base stations.
27. The wireless device of any one of Embodiments 19 to 25, wherein:
   the wireless device is configured to receive synchronization signals from a plurality of base stations,
   the transmissions from the plurality of base stations are not synchronized with respect to a location of the wireless device,
   the wireless device is configured with a plurality of SMTC windows and/or a plurality of measurement gaps,
   each of the plurality of SMTC windows and/or measurement gaps are configured for a respective one of the plurality of base stations, and
   performing the adjustment comprises performing the adjustment to a particular one of the SMTC windows and/or measurement gaps that is associated with the respective one of the plurality of base stations.
28. A base station for Synchronization Signal Block Measurement Time Configuration, SMTC, window and measurement gap configuration, the base station comprising:
   processing circuitry configured to:
   transmit, to at least one wireless device, at least one configuration parameter for the SMTC window and/or a measurement gap, the configuration parameter associated with a time when the at least one wireless device is to attempt to receive at least one synchronization signal;
   receive, from the at least one wireless device, an indication that the at least one wireless device has made an adjustment to at least one of the SMTC window or the measurement gap; and
   transmit the at least one synchronization signal based on the adjustment made by the wireless device.
29. The base station of Embodiment 28, wherein the processing circuitry is configured to configure the wireless device to:
   calculate a propagation delay based on the information provided in the at least one configuration parameter; and
   adjust at least one of the SMTC window or the measurement gap based on the propagation delay.
30. The base station of any one of Embodiments 28 to 29, wherein the network comprises a non-terrestrial base station.
31. The base station of any one of Embodiments 28 to 30, wherein the at least one configuration parameter comprises at least one of:
   one or more timestamps,
   one or more ephemeris data,
   position information associated with the at least one wireless device, and
   one or more reference positions for a cell associated with the at least one synchronization signal.
32. The base station of any one of Embodiments 28 to 30, wherein:
   the configuration comprises a list of adjustments, and
   the indication from the at least one wireless device comprises an index value indicating the adjustment selected from the list of adjustments.
33. The base station of any one of Embodiments 28 to 32, wherein the adjustment comprises an offset for a starting gap pattern.
34. The base station of any one of Embodiments 28 to 33, wherein the adjustment comprises a change to a length of a gap.
35. The base station of any one of Embodiments 28 to 34, wherein the processing circuitry is configured to:
   receive a position associated with the at least one wireless device;
   calculate an estimated adjustment for at least one of the SMTC or the measurement gap based on the position of the at least one wireless device; and
   transmit the at least one synchronization signal based on the estimated adjustment.
36. The base station of any one of Embodiments 28 to 35, wherein a single SMTC window and/or a single measurement gap is configured for a plurality of base stations, and wherein the at least one synchronization signal is transmitted in synchronization with at least one additional synchronization signal transmitted by the at least one additional base station.

## Claims

1. A method performed by a wireless device for a Synchronization Signal Block Measurement Time Configuration, SMTC, window and measurement gap configuration, the method comprising:
receiving at least one configuration parameter and a reference location parameter for the SMTC window and/or a measurement gap from a network;
performing an adjustment to the at least one configuration parameter based on a location of the wireless device with respect to the reference location;
performing an adjustment of the SMTC window and/or the measurement gap based on the adjusted at least one configuration parameter;
transmitting the adjustment to the network; and
measuring a plurality of synchronization signals associated with a plurality of cells, wherein each synchronization signal is measured based on the adjustment to the SMTC window and/or the measurement gap.

2. The method of Claim 1, further comprising:
based on the information provided in the at least one configuration parameter, calculating a propagation delay with respect to a base station associated with the at least one synchronization signal and/or a distance to the base station associated with the at least one synchronization signal; and
wherein at least one of the SMTC window or the measurement gap is adjusted based on the propagation delay and/or the distance to the base station associated with the at least one synchronization signal.

3. The method of any one of Claims 1 to 2, wherein the network comprises a non-terrestrial base station.

4. The method of any of any one of Claims 1 to 3, wherein the at least one configuration parameter comprises at least one of:
one or more timestamps,
one or more ephemeris data,
position information associated with the wireless device, and
one or more reference positions for a cell associated with the at least one synchronization signal.

5. The method of any one of Claims 1 to 4, wherein performing the adjustment comprises applying an offset for starting a gap pattern and/or applying a change to a length of a gap.

6. The method of any one of Claims 1 to 5, wherein:
the wireless device is configured to receive synchronization signals from a plurality of base stations, the transmissions from the plurality of base stations are synchronized with respect to a location of the wireless device, a single SMTC window and/or a single measurement gap is configured for the plurality of base stations, and wherein performing the adjustment comprises adjusting the single SMTC window and/or the single measurement gap configured for the plurality of base stations; or
the wireless device is configured to receive synchronization signals from a plurality of base stations, the transmissions from the plurality of base stations are not synchronized with respect to a location of the wireless device, the wireless device is configured with a plurality of SMTC windows and/or a plurality of measurement gaps, each of the plurality of SMTC windows and/or measurement gaps are configured for a respective one of the plurality of base stations, and performing the adjustment comprises performing the adjustment to a particular one of the SMTC windows and/or measurement gaps that is associated with the respective one of the plurality of base stations.

7. A method performed by a base station for Synchronization Signal Block Measurement Time Configuration, SMTC, window and measurement gap configuration, the method comprising:
transmitting, to at least one wireless device, at least one configuration parameter and a reference location parameter for the SMTC window and/or a measurement gap, the configuration parameter associated with a time when the at least one wireless device is to attempt to receive at least one synchronization signal;
receiving, from the at least one wireless device, an indication that the at least one wireless device has made an adjustment to at least one of the SMTC window or the measurement gap; and
transmitting the at least one synchronization signal based on the adjustment made by the wireless device.

8. The method of Claim 7, further comprising configuring the wireless device to:
calculate a propagation delay and/or a distance to the base station associated with the at least one synchronization signal based on the information provided in the at least one configuration parameter; and
adjust at least one of the SMTC window or the measurement gap based on the propagation delay and/or the distance to the base station associated with the at least one synchronization signal.

9. The method of any one of Claims 7 to 8, wherein the network comprises a non-terrestrial base station.

10. The method of any one of Claims 7 to 9, wherein the at least one configuration parameter comprises at least one of:
one or more timestamps,
one or more ephemeris data,
position information associated with the at least one wireless device, and
one or more reference positions for a cell associated with the at least one synchronization signal.

11. The method of any one of Claims 7 to 10, wherein the adjustment comprises an offset for a starting gap pattern and/or a change to a length of a gap.

12. The method of any one of Claims 7 to 11, further comprising:
receiving a position associated with the at least one wireless device;
calculating an estimated adjustment for at least one of the SMTC or the measurement gap based on the position of the at least one wireless device; and
transmitting the at least one synchronization signal based on the estimated adjustment.

13. The method of any one of Claims 7 to 12, wherein a single SMTC window and/or a single measurement gap is configured for a plurality of base stations, and wherein the at least one synchronization signal is transmitted in synchronization with at least one additional synchronization signal transmitted by the at least one additional base station.

14. A wireless device for Synchronization Signal Block Measurement Time Configuration, SMTC, window and measurement gap configuration, the wireless device comprising processing circuitry configured to perform the method of any of claims 1 to 6.

15. A base station for Synchronization Signal Block Measurement Time Configuration, SMTC, window and measurement gap configuration, the base station comprising processing circuitry configured to perform the method of any of claims 7 to 13.
